(19) Europäisches Patentamt
European Patent Office
Office européen des brevets

(11) **EP 2 458 525 A1**

(12) **EUROPEAN PATENT APPLICATION**

(43) Date of publication:
**30.05.2012 Bulletin 2012/22**

(51) Int Cl.:
***G06F 21/20*** *(2006.01)*

(21) Application number: **10193001.4**

(22) Date of filing: **29.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Research In Motion Limited Waterloo, ON N2L 3W8 (CA)**

(72) Inventor: **Griffin, Jason Tyler Waterloo Ontario N2L 3W8 (CA)**

(74) Representative: **Moore, Barry et al Hanna Moore & Curley 13 Lower Lad Lane Dublin 2 (IE)**

(54) **Multiple-input device lock and unlock**

(57)    A device, such as a communication device or data processing device, is configured to transition between a locked and unlocked state in response to a detected action that is interpreted as a continuous or single action. In an embodiment a first input is detected at a first input mechanism of the device when the device is locked, then a second input is detected at the second input. If the inputs are determined to be continuous, for example if the second input is detected within a predetermined period after completion of the first input, the device is unlocked. The input may also be combined or interpreted as a password or security code. Conversely, if a detected action is interpreted as a continuous or single action by an unlocked device, the device may enter the locked state in response to the detected action. Methods for implementing this transition between locked and unlocked states are also provided.

FIG. 6A

## Description

The present application relates generally to systems and methods for placing a mobile device in locked and unlocked states.

To enhance security and to conserve battery life, mobile devices such as smartphones, personal digital assistants (PDAs), tablet computers, laptop computers, and the like, are typically configured to enter into a secure mode or a sleep mode after a period of inactivity or in response to an express command. In a secure mode, the device's functions and stored data are inaccessible until the user inputs the required code, such as a personal identification number (PIN), or sequence of key presses. In a sleep mode, one or more of the device's user interfaces (such as the display, trackball, touchscreen interface, and so forth) may be inactivated and, in the case of a user input interface, incapable of receiving input until they are activated again. Activation of the inactivated user interface may require input at a designated one of the user input interfaces provided on the device, which is maintained in an awake state in which it is provided with sufficient power to detect user input.

Brief Description of the Drawings

In drawings which illustrate by way of example only embodiments of the present application,

FIG. 1 is a block diagram of an embodiment of an exemplary handheld mobile device.

FIG. 2 is a state diagram illustrating two states of a user device.

FIG. 3 is a further state diagram illustrating three states of a user device.

FIG. 4 is a cross-sectional view of the handheld device of FIG. 1.

FIGS. 5A to 5C are perspective views of a handheld device being unlocked or locked.

FIGS. 6A to 6F are schematic diagrams of user input paths on a handheld touchscreen device.

FIGS. 7A to 7E are schematic diagrams of user input paths on a further handheld device.

FIGS. 8A to 8D are perspective views of a further embodiment of a handheld device being unlocked or locked.

FIGS. 9A and 9B are further schematic diagrams of user input paths on a handheld device.

FIG. 9C is a timeline illustrating gap, activation and detection periods for detected user input.

FIG. 10 is a state diagram illustrating various states of a handheld device including unlocked and locked states.

FIG. 11 is a flowchart illustrating a process for unlocking a handheld device.

FIG. 12 is a flowchart illustrating a process for locking a handheld device.

FIGS. 13A to 13C are illustrations of exemplary graphical user interfaces displayable on a handheld device during a locking process.

FIG. 14 is a flowchart illustrating a process for configuring a handheld device for use with the method of FIG. 11 or 12.

FIG. 15 is a flowchart illustrating a process for training a handheld device for use with the method of FIG. 11 or 12.

FIGS. 16A to 16D are further perspective views of another embodiment of a handheld device being unlocked.

FIGS. 17A to 17D are further perspective views of the handheld device of FIGS. 16A to 16D being locked.

Detailed Description

It is common for user data processing devices, such as smartphones, PDAs, tablets, laptops, personal computers, media players, and other devices used for personal communication, productivity or entertainment to preserve battery life or otherwise reduce power consumption by entering into a sleep mode or inactive mode, in which certain functions of the device or its peripherals are halted or suspended pending reactivation by the user. For example, in a personal computer including a separate processor unit, monitor, keyboard and pointing device, after a predetermined period of inactivity detected by the computer's processor, a signal may be sent to the monitor to enter into a screen saver mode, reducing its power consumption, or to enter a sleep mode, in which it receives little to no power. The processor itself may also halt certain processes or disk activity until a signal is received from the user to "wake up", or to reactivate the various processes or the monitor. The signal may be received from one of the user input interface devices, such as the keyboard or the pointing device; for example, clicking a button on the pointing device, or depressing a key on the keyboard, may be sufficient to "wake up" the computer and reactivate the monitor and other processes.

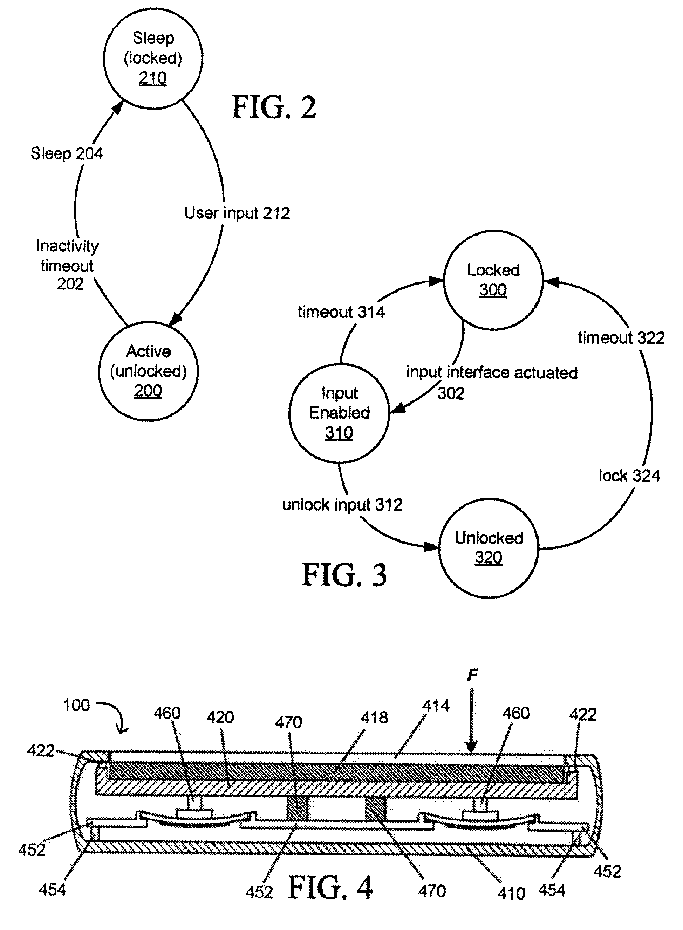

Similarly, with reference to FIG. 2, in a handheld mobile device such as a smartphone or tablet computer, to conserve the battery the device may be configured to enter a sleep mode 210 in which the screen is blanked, either automatically upon detection of a period of inactivity 202 or in response to an express command 204, from an initial active state 200. The screen may be reactivated upon detection of an input 212 received via a user input interface that may also be integrated into the device, such as the keypad or a convenience key. In the case of a device equipped with a touchscreen display, one of the primary user input interfaces may be the touchscreen interface. The entire touchscreen interface, including the display component as well as the touch-sensitive component, may be inactivated in sleep mode to reduce power consumption. Other user input interfaces on the device, such as optical joysticks, trackballs, scroll wheels, capacitive components such as touchpads and buttons, keyboards, and other buttons utilizing other types of switch technology, may also be configured to be inactivated while in sleep mode, leaving only select ones of the input mechanisms sufficiently powered to detect a user input. When one of those active input mechanisms detects a user input, such as a keypress, the processor can then be signaled to reactivate the other input interfaces on the device and return the device to an awake and operative state.

In a simple embodiment, the sleep mode simply conserves power. Sleep mode may be combined with a secure mode and optionally content protection. To enhance the security of the device, the device's functions or data, or both may be made accessible only if the correct security code, such as a PIN or password, has been entered by the user. Correct entry of the security code places the device in an insecure state in which the device's data and functions are accessible. Typically, the security code can be an alphanumeric key that may be input using the keyboard 116 or a virtual keyboard displayed on a touchscreen interface, or it may be a defined sequence of user manipulation of various input mechanisms (for example, a particular sequence of button presses). In the case of a computing device with a touchscreen or touchpad interface, the security code may be a gesture or symbol traced on the touchscreen or touchpad surface, and detected by sensing the contact or pressure by the interface. In this secure mode, data may not be encrypted; effectively, the secure mode prevents access to data and functions because access to the device's user interface is restricted. This secure mode may be referred to as a "screen lock" mode, as typically the device's display is a primary user interface means for gaining access to functions and data, and while in secure mode, the device's display can display only a user interface for the user to enter credentials.

The secure or "locked" mode can include a content protected state, if content protection is enabled on the device. The PIN or password can be used to encrypt user data stored on the device as well. For example, the security code or a value derived therefrom may be used to decrypt an encryption key stored at the computing device, which can then be stored in temporary memory and used to decrypt encrypted data and encrypt plaintext data during the current session a. Again, after a period of user input inactivity or in response to an instruction, the device may automatically return to the secure state, which any unencrypted data that is marked for content protection is encrypted, and the encryption key (and the security code, if it is still stored in memory) deleted from memory. In addition, the device may automatically enter sleep mode upon detecting the inactivity timeout (or in response to the express instruction) and entering the secure mode, thus providing security and reduced power consumption. Thus, when the user subsequently wishes to use the computing device, the user must again input the security code to obtain access to functions or data on the device. Generically, either the sleep mode or the secure mode (or "screen lock" mode) may be referred to as a "locked" state, where some function or data-whether it is the functionality of one of the user input interfaces, the functionality of an application normally executable on the device, or access to the data stored on the device-is disabled or inactivated, whether because an input mechanism is in a low power state, the function or data is inaccessible without entry of the appropriate security code, data is encrypted, or a combination of two or more of these conditions. The awake mode or insecure mode may then be referred to as an "unlocked" state, as the user input interfaces are generally all available, as well as the stored data and other functionality of the device. The "locked" and "unlocked" states described herein are intended to include both the sleep, screen lock and awake modes, and the secure and insecure modes, described above unless otherwise indicated.

Particularly with a handheld device, the action used to invoke the unlock routine-a keypress, manipulation of the scroll wheel, contact or pressure on a touch-sensitive or pressure-sensitive button-may be invoked accidentally, thus waking up the device and increasing power consumption when it was in fact not required by the user. Small user devices may be carried by the user in holsters or cases, which can reduce the likelihood of accidental manipulation of input mechanisms, but if the user carries the device in a pocket, purse, knapsack, briefcase, or other carrier in which the device may be jostled or come into contact with other objects or surfaces, the user input mechanism used to trigger the device to come out of sleep mode may be inadvertently actuated. Accordingly, a more complex wake-up or unlock action may be required to completely activate the device. For example, the required input from the user may involve a sequence of keypresses, which, as will be appreciated by those skilled in the art, can be the PIN or password required to place the device in the insecure mode. Thus, with a device where the device keyboard continues to be capable of receiving input while the device is in sleep mode, the user may bring the device out of sleep mode by typing in the complete PIN on the keyboard. This process is somewhat cumbersome for the user, as it requires multiple distinct actions as the user locates and depresses each key representative of the PIN digits, and it prolongs the time required to bring the device out of sleep mode and into an unlocked mode compared to a simpler wake-up process involving only a single keypress or single manipulation of another input device.

The wake-up input may also be made more complex by requiring the user to engage two different user input interfaces, such as a physical button and a touchscreen. As illustrated in FIG. 3, in the locked state one input interface such as a physical button may remain active, and detection of input 302 at the button can be used to trigger the device to activate the touchscreen interface, placing the device in an input enabled state 310 in which it can receive a security code or other input such as a gesture. When the second input 312 is detected while the touchscreen is active, the device is brought out of sleep or locked mode and into an active or unlocked state 320. This process may add slightly to the time required to bring the device out of sleep mode, since two distinct inputs or actions are required on the user's part. Furthermore, it is possible in such scenarios that the wake-up inputs may still be invoked accidentally, since for example the physical button may be accidentally depressed in the user's pocket, and subsequently, inadvertent contact on the touchscreen surface would unlock the device. Even where the second input (whether a PIN or a gesture) is not input at the device, the accidental activation of the first input interface can increase battery consumption. Again, if the physical button remains active in sleep mode and is accidentally depressed, the device display would then be activated. Once the device display is activated, it remains in the active state unless an express instruction to lock the device (and thus deactivate the display) or a user activity timeout is detected, as discussed above. In this scenario, it is more likely that the timeout would have to occur before the display is deactivated, since the initial activation was accidental and the user was likely not aware of the activation; thus, the display must continue to consume power pending the timeout.

Accordingly, the embodiments described herein provide a method, comprising: detecting a single, continuous unlock action applied to at least two input mechanisms on a locked electronic device; and unlocking the electronic device in response to said detecting.

The embodiments herein also provide a method comprising: detecting a single, continuous lock action applied to at least two input mechanisms on a locked electronic device; and locking the electronic device in response to said detecting.

The embodiments herein further provide a method, comprising detecting a first input at a first input mechanism in a locked electronic device; detecting a second input at a second input mechanism in the electronic device; and when the second input is detected within a predetermined period of time after completion of the first input, unlocking the electronic device.

In an aspect of these methods, sufficient power is provided to the first input mechanism such that the first input mechanism is capable of detecting the first input. In a further aspect, upon detection of the first input at the first input mechanism, the second input mechanism is activated such that the second input mechanism is capable of detecting the second input.

In a further aspect, the detected first input and the detected second input may substantially match a predetermined input action. In some embodiments, the second input mechanism is a touchscreen, and the electronic device is configured to further interpret the second input as a password for user authentication.

Further, the within embodiments provide that the at least two input mechanisms are selected from the group consisting of: a button, a keyboard, a touchpad, an optical joystick, a scroll wheel, a touchscreen, and a slider mechanism. In one aspect, the at least two input mechanisms are selected from different members of said group. In a further aspect, the single, continuous unlock action is applied to two input mechanisms. In still a further aspect, the single, continuous unlock action is applied to three input mechanisms. The first input mechanism may be a button.

In yet another aspect, detecting said single, continuous unlock action comprises determining that inputs applied to said at least two input mechanisms constitute a single action based on a timing or a speed of the detected inputs.

In still a further aspect, detecting said single, continuous unlock action comprises determining that a duration of time between a detected first input at a first one of said at least two input mechanisms and a detected second input at a second one of said at least two input mechanisms is within an expected range.

In another aspect, detecting said single, continuous unlock action comprises determining that a path represented by inputs applied to said at least two input mechanisms was completed within either a predefined range of speed or a predefined range of time.

The embodiments described herein also provide an electronic device, comprising at least two input mechanisms; and a processor in operative communication with the at least two input mechanisms, the processor being configured to: while the electronic device is in a locked state, detect, using said at least two input mechanisms, a single, continuous unlock action applied to said at least two input mechanisms; and unlock the electronic device in response to said detecting.

The embodiments further provide an electronic device, comprising: at least two input mechanisms; and a processor in operative communication with said at least two input mechanisms, the processor being configured to: detect a single, continuous lock action applied to said at least two input mechanisms while the electronic device is in a locked state; and lock the electronic device in response to said detection.

Further, the embodiments herein provide an electronic device, comprising: a first input mechanism; a second input mechanism; and a processor in operative communication with said at least two input mechanisms, the processor being configured to: detect a first input at the first input mechanism while the electronic device is in a locked state; detect a second input at the second input mechanism; when the second input is detected within a predetermined period of time after completion of the first input, unlock the electronic device.

In an aspect of these electronic devices, sufficient power is provided to the first input mechanism such that the first input mechanism is capable of detecting the first input. In a further aspect, upon detection of the first input at the first input mechanism, the second input mechanism is activated such that the second input mechanism is capable of detecting the second input.

In a further aspect, the detected first input and the detected second input may substantially match a predetermined input action. In some embodiments, the second input mechanism is a touchscreen, and the electronic device is configured to further interpret the second input as a password for user authentication.

Further, the within embodiments provide that the at least two input mechanisms are selected from the group consisting of: a button, a keyboard, a touchpad, an optical joystick, a scroll wheel, a touchscreen, and a slider mechanism. In one aspect, the at least two input mechanisms are selected from different members of said group. In a further aspect, the single, continuous unlock action is applied to two input mechanisms. In still a further aspect, the single, continuous unlock action is applied to three input mechanisms. The first input mechanism may be a button.

In yet another aspect, detection of said single, continuous unlock action comprises determining that inputs applied to said at least two input mechanisms constitute a single action based on a timing or a speed of the detected inputs.

In still a further aspect, detection of said single, continuous unlock action comprises determining that a duration of time between a detected first input at a first one of said at least two input mechanisms and a detected second input at a second one of said at least two input mechanisms is within an expected range.

In another aspect, detection of said single, continuous unlock action comprises determining that a path represented by inputs applied to said at least two input mechanisms was completed within either a predefined range of speed or a predefined range of time.

The embodiments described herein further provide an electronic device adapted to have locked and unlocked states, the electronic device comprising at least two input mechanisms; and means adapted to, while the electronic device is in one of said locked and unlocked states, detect a single, continuous action applied to said at least two input mechanisms; and means adapted to transition the electronic device to the other of said locked and unlocked states in response to said detecting.

In a further aspect, the means adapted to detect are adapted to determine that inputs applied to said at least two input mechanisms constitute a single action based on a timing or a speed of the detected inputs. In another aspect, said means adapted to detect are further adapted to determine that a duration of time between a detected first input at a first one of said at least two input mechanisms and a detected second input at a second one of said at least two input mechanisms is within an expected range. In still a further aspect, said means adapted to detect are further adapted to determine that a path represented by inputs applied to said at least two input mechanisms was completed within either a predefined range of speed or a predefined range of time.

In another aspect of the within embodiments, the electronic device is initially in said locked state, and further wherein a first one of the at least two input mechanisms is sufficiently powered to detect a first input, and upon detection of the first input, the second input mechanism is activated such that the second input mechanism is capable of detecting the second input.

In still another aspect, the at least two input mechanisms are selected from the group consisting of: a button, a keyboard, a touchpad, an optical joystick, a scroll wheel, a touchscreen, and a slider mechanism. The at least two input mechanisms may be selected from different members of said group.

The within embodiments further provide a method of transitioning an electronic device between a locked and an unlocked state, comprising: detecting a single, continuous action applied to at least two input mechanisms on the electronic device when the electronic device is in one of said locked and unlocked states; and transitioning the electronic device to the other of said locked and unlocked states in response to said detecting.

An aspect of this method provides that detecting said single, continuous action comprises determining that inputs applied to said at least two input mechanisms constitute a single action based on a timing or a speed of the detected inputs. Further, another aspect provides that said detecting further comprises determining that a duration of time between a detected first input at a first one of said at least two input mechanisms and a detected second input at a second one of said at least two input mechanisms is within an expected range. In still another aspect, said detecting further comprises determining that a path represented by inputs applied to said at least two input mechanisms was completed within either a predefined range of speed or a predefined range of time.

In another aspect of the within methods, the electronic device is initially in said locked state, and a first one of the at least two input mechanisms is sufficiently powered to detect a first input, and upon detection of the first input, the second input mechanism is activated such that the second input mechanism is capable of detecting the second input.

In a further aspect, the at least two input mechanisms are selected from the group consisting of: a button, a keyboard, a touchpad, an optical joystick, a scroll wheel, a touchscreen, and a slider mechanism, and in yet another aspect the at least two input mechanisms are selected from different members of said group.

Instructions for configuring an electronic device to carry out the within methods and processes may be embodied on a computer storage medium, which may be non-transitory.

As used herein, an input or interface mechanism can include a physical feature such as a button, convenience or "soft" key or programmable button, keyboard, trackpad or touchpad, optical joystick, rocker button, scroll wheel, touchscreen, and the like. User input or interface elements can include physical features such as those mentioned above, as well as virtual features displayed on a device display, such as a virtual keyboard, a graphical user interface element such as a button, form field, slider, hyperlink or other HTML element, icon, or other text or graphics-based object displayable in a graphical user interface.

Further, "actuation" of a user input mechanism or element includes physical activation of the user input mechanism, for example by depressing a button, releasing the button, moving a scroll wheel, tracing a gesture or path on the surface of a touchscreen configured to receive input, and so forth. Typically, such actuation causes a signal to be detected by a controller or processor in the device, and this signal may be used to trigger or generate an instruction for execution by the device. Similarly, actuation of a user interface element such as a graphical user interface element, can be accomplished by selection of the element, hovering over the element, or activating the element in the graphical user interface, as well as by other actions operating on the element, and using a pointing, scrolling or other navigation input (for example, using gestures and taps on a touchscreen to select and "click" an icon).

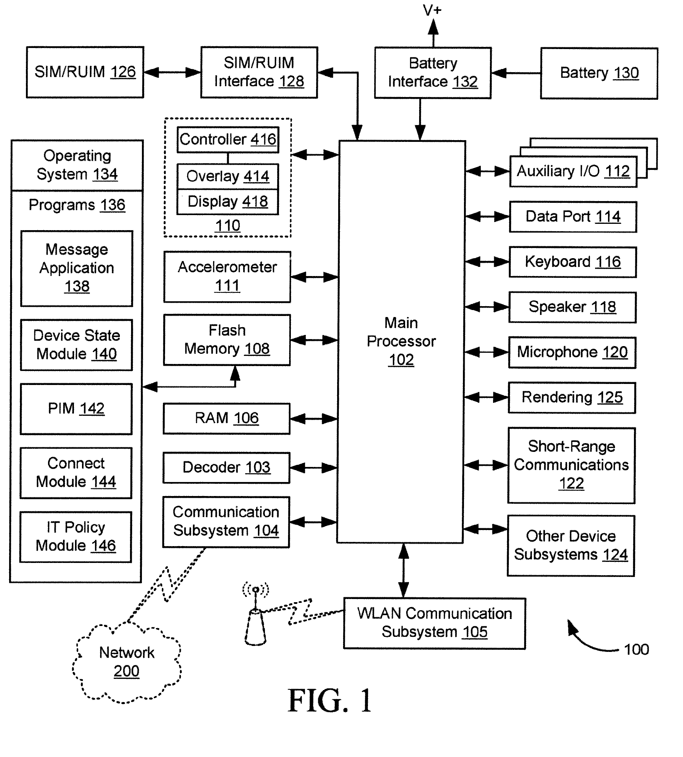

The embodiments described herein may be implemented on a communication device such as that illustrated in FIG. 1. The user device 100 may be a mobile device with two-way communication and advanced data communication capabilities including the capability to communicate with other mobile devices or computer systems through a network of transceiver stations. In such an embodiment, the user device 100 can also have voice communication capabilities. Although the embodiments herein may specifically refer to a user device having communication capabilities, and in particular to a user device that is adapted for handheld usage , the teachings herein may be applied to any appropriate communication or data processing device, whether portable or wirelessly enabled or not, including without limitation cellular phones, smartphones, wireless organizers, personal digital assistants, desktop computers, terminals, laptops, tablets, handheld wireless communication devices, notebook computers and the like. Thus, the communication and computing devices contemplated herein may have different principal functions and form factors. The devices may also include a variety of user input interfaces, but generally at least two distinct such interfaces. The interfaces may be selected from touchscreen displays, trackballs, trackpads, optical joysticks, thumbwheels or scroll wheels, buttons, switches, keyboards, keypads, convenience or programmable keys and buttons, and the like. Throughout the specification, terms such as "may" and "can" are used interchangeably and use of any particular term should not be construed as limiting the scope or requiring experimentation to implement the claimed subject matter or embodiments described herein.

FIG. 1 is a block diagram of an exemplary embodiment of a user device 100 adapted to communicate over wireless networks. The user device 100 includes a number of components such as a main processor 102 that controls the overall operation of the user device 100. Communication functions, including data and voice communications, are performed through a communication subsystem 104. Data received by the user device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES)). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this exemplary embodiment of the user device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the user device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE, HSPA, HSPA+, EVDO and UMTS, or fourth-generation (4G) networks such as LTE and LTE Advanced. Some other examples of data-centric networks include WiFi 802.11™, Mobitex™ and DataTAC™ network communication systems. Examples of other voice-centric data networks include Personal Communication Systems (PCS) networks like GSM and Time Division Multiple Access (TDMA) systems. The mobile device 100 may be provided with additional communication subsystems, such as the wireless LAN (WLAN) communication subsystem 105 also shown in FIG. 1. The mobile device 100 may be provided with additional communication subsystems, such as the wireless LAN (WLAN) communication subsystem 105 and the wireless personal area network (WPAN) or Bluetooth® communication subsystem 107 also shown in FIG. 1. The WLAN communication subsystem may operate in accordance with a known network protocol such as one or more of the 802.11™ family of standards developed by IEEE, and the WPAN communication subsystem in accordance with a protocol such as the 802.15.1 standard developed by the IEEE. The communication subsystem 105, 107 may be separate from, or integrated with, the communication subsystem 104 or with the short-range communications module 122. The main processor 102 also interacts with additional subsystems such as a Random Access Memory (RAM) 106, a flash memory 108, a display interface 110, an auxiliary input/output (I/O) subsystem 112, a data port 114, a keyboard 116, a speaker 118, a microphone 120, the short-range communications 122 and other device subsystems 124. The communication device may also be provided with an accelerometer 111, which may be used to detect gravity- or motion-induced forces and their direction. Detection of such forces applied to the device 100 may be processed to determine a response of the device 100, such as an orientation of a graphical user interface displayed on the display interface 110 in response to a determination of the current orientation of which the device 100.

Some of the subsystems of the user device 100 perform communication-related functions, whereas other subsystems can provide "resident" or on-device functions. By way of example, the display interface 110 and the keyboard 116 can be used for both communication-related functions, such as entering a text message for transmission over the network 200, and device-resident functions such as a calculator or task list.

A rendering circuit 125 is included in the device 100. When a user specifies that a data file is to be viewed on the display interface 110, the rendering circuit 125 analyzes and processes the data file for visualization on the display interface 110. Rendering data files originally optimized or prepared for visualization on large-screen displays on a portable electronic device display often requires additional processing prior to visualization on the small-screen portable electronic device displays. This additional processing may be accomplished by the rendering engine 125. As will be appreciated by those of skill in the art, the rendering engine can be implemented in hardware, software, or a combination thereof, and can comprise a dedicated image processor and associated circuitry, or can be implemented within main processor 102.

The user device 100 can send and receive communication signals over the wireless network 200 after required network registration or activation procedures have been completed. Network access is associated with a subscriber or user of the user device 100. To identify a subscriber, the user device 100 requires a SIM/RUIM card 126 (i.e. Subscriber Identity Module or a Removable User Identity Module) to be inserted into a SIM/RUIM interface 128 in order to communicate with a network.

The SIM/RUIM card 126 is one type of a conventional "smart card" that can be used to identify a subscriber of the user device 100 and to personalize the user device 100, among other things. Without the SIM/RUIM card 126, the user device 100 is not fully operational for communication with the wireless network 200. By inserting the SIM/RUIM card 126 into the SIM/RUIM interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical mobile device. The SIM/RUIM card 126 can store additional subscriber information for a mobile device as well, including datebook (or calendar) information and recent call information. Alternatively, user identification information can also be programmed into the flash memory 108.

The user device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the user device 100. Although current technology makes use of a battery, future technologies such as micro fuel cells can provide the power to the user device 100.

The user device 100 also includes an operating system 134 and software components 136 to 146 which are described in more detail below. The operating system 134 and the software components 136 to 146 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 136 to 146, such as specific device applications, or parts thereof, can be temporarily loaded into a volatile store such as the RAM 106. Other software components can also be included, as is well known to those skilled in the art.

The subset of software applications 136 that control basic device operations, including data and voice communication applications, will normally be installed on the user device 100 during its manufacture. Other software applications include a message application 138 that can be any suitable software program that allows a user of the user device 100 to send and receive electronic messages. Various alternatives exist for the message application 138 as is well known to those skilled in the art. Messages that have been sent or received by the user are typically stored in the flash memory 108 of the user device 100 or some other suitable storage element in the user device 100. In at least some embodiments, some of the sent and received messages can be stored remotely from the device 100 such as in a data store of an associated host system that the user device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the user device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the user device 100 with respect to such items. This can be particularly advantageous when the host computer system is the mobile device subscriber's office computer system.

The user device 100 also includes a connect module 144, and an information technology (IT) policy module 146. The connect module 144 implements the communication protocols that are required for the user device 100 to communicate with the wireless infrastructure and any host system, such as an enterprise system, that the user device 100 is authorized to interface with. Examples of a wireless infrastructure and an enterprise system are given in FIGS. 3 and 4, which are described in more detail below.

The connect module 144 includes a set of Application Programming Interfaces (APIs) that can be integrated with the user device 100 to allow the user device 100 to use any number of services associated with the enterprise system. The connect module 144 allows the user device 100 to establish an end-to-end secure, authenticated communication pipe with the host system. A subset of applications for which access is provided by the connect module 144 can be used to pass IT policy commands from the host system to the user device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the user device 100. These software applications can be third party applications, which are added after the manufacture of the user device 100. Examples of third party applications include games, calculators, utilities, etc.

The additional applications can be loaded onto the user device 100 through at least one of the wireless network 200, the auxiliary I/O subsystem 112, the data port 114, the short-range communications subsystem 122, or any other suitable device subsystem 124. This flexibility in application installation increases the functionality of the user device 100 and can provide enhanced on-device functions, communication-related functions, or both. For example, secure communication applications can enable electronic commerce functions and other such financial transactions to be performed using the user device 100.

The data port 114 enables a subscriber to set preferences through an external device or software application and extends the capabilities of the user device 100 by providing for information or software downloads to the user device 100 other than through a wireless communication network. The alternate download path can, for example, be used to load an encryption key onto the user device 100 through a direct and thus reliable and trusted connection to provide secure device communication. The data port 114 can be any suitable port that enables data communication between the user device 100 and another computing device. The data port 114 can be a serial or a parallel port. In some instances, the data port 114 can be a USB port that includes data lines for data transfer and a supply line that can provide a charging current to charge the battery 130 of the user device 100.

The short-range communications subsystem 122 provides for communication between the user device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, and the 802.11™ family of standards.

In use, a received signal such as a text message, an e-mail message, or web page download will be processed by the communication subsystem 104 and input to the main processor 102. The main processor 102 will then process the received signal for output to the display interface 110 or alternatively to the auxiliary I/O subsystem 112. A subscriber can also compose data items, such as e-mail messages, for example, using the keyboard 116 in conjunction with the display interface 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 may be an alphanumeric keyboard and/or telephone-type keypad. However, other types of keyboards can also be used. A composed item can be transmitted over the wireless network 200 through the communication subsystem 104. It will be appreciated that if the display interface 110 comprises a touchscreen, then the auxiliary subsystem 112 may still comprise one or more of the devices identified above.

For voice communications, the overall operation of the user device 100 is substantially similar, except that the received signals are output to the speaker 118, and signals for transmission are generated by the microphone 120. Alternative voice or audio I/O subsystems, such as a voice message recording subsystem, can also be implemented on the user device 100. Although voice or audio signal output is accomplished primarily through the speaker 118, the display interface 110 can also be used to provide additional information such as the identity of a calling party, duration of a voice call, or other voice call related information.

The communication subsystem component 104 may include a receiver, transmitter, and associated components such as one or more embedded or internal antenna elements, Local Oscillators (LOs), and a processing module such as a Digital Signal Processor (DSP) in communication with the transmitter and receiver. Signals received by an antenna through the wireless network 200 are input to the receiver, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP. In a similar manner, signals to be transmitted are processed, including modulation and encoding, by the DSP, then input to the transmitter for digital-to-analog (D/A) conversion, frequency up conversion, filtering, amplification and transmission over the wireless network 200 via an antenna. The DSP not only processes communication signals, but also provides for receiver and transmitter control, including control of gains applied to communication signals in the receiver and the transmitter. When the user device 100 is fully operational, the transmitter is typically keyed or turned on only when it is transmitting to the wireless network 200 and is otherwise turned off to conserve resources. Similarly, the receiver is periodically turned off to conserve power until it is needed to receive signals or information (if at all) during designated time periods. Other communication subsystems, such as the WLAN communication subsystem 105 shown in FIG. 1, may be provided with similar components as those described above configured for communication over the appropriate frequencies and using the appropriate protocols. The particular design of the communication subsystem 104 or 105 is dependent upon the communication network 200 with which the user device 100 is intended to operate. Thus, it should be understood that the foregoing description serves only as one example.

In some embodiments, the user device 100 may comprise a touchscreen-based device, in which the display interface 110 is a touchscreen interface that provides both a display for communicating information and presenting graphical user interfaces, as well as an input subsystem for detecting user input that may be converted to instructions for execution by the device 100. The touchscreen display interface 110 may be the principal user interface provided on the device 100, although in some embodiments, additional buttons, variously shown in the figures or a trackpad, or other input means may be provided.

Referring to FIG. 4, which illustrates a cross-section of an embodiment of a touchscreen device, the device may comprise a housing 410, which may be formed in one or more pieces using appropriate materials and techniques, such as injection-molded plastics. The display interface 110 is mounted in the housing 410, and may be movable relative to the housing 410. Generally, construction of the touchscreen and its implementation in the user device 100 will be understood by those skilled in the art. Examples in the art include commonly-owned U.S. Patent Application Publication Nos. 2004/0155991, 2009/0244013, 2010/0128002 and 2010/0156843. Briefly, a touch-sensitive display may comprise suitable touch-sensitive screen technology, such as a capacitive, resistive, infrared, surface acoustic wave (SAW) touch-sensitive display, strain gauge, optical imaging, dispersive signal technology, acoustic pulse recognition, and so forth, as known in the art. A capacitive touchscreen display includes a capacitive touch-sensitive overlay 414 that may comprise an assembly of multiple layers including a substrate, ground shield layer, barrier layer, one or more capacitive touch sensor layers separated by a substrate or other barrier, and a cover. The capacitive touch sensor layers may be any suitable material, such as patterned indium tin oxide (ITO). An example of such a touchscreen display interface 110 is described in aforementioned U.S. Patent Application No. 2010/0128002. Optionally, the device 100 may also provide haptic or tactile feedback through the housing of the device 100, or through the touchscreen itself.

In one embodiment, a transmissive TFT LCD screen is overlaid with a clear touch sensor assembly that supports single and multi-touch actions such as tap, double-tap, tap and hold, tap and drag, scroll, press, flick, and pinch. The touchscreen display interface 110 detects these single and multi-touch actions, for example through the generation of a signal or signals in response to a touch, which may then be processed by the processor 102 or by an additional processor or processors in the device 100 to determine the location of the touch action, whether defined by horizontal and vertical screen position data or other position data. Touch location data may include an area of contact or a single point of contact, such as a point at or near a center of the area of contact. The touchscreen display interface 110 may be provided with separate horizontal and vertical sensors or detectors to assist in identifying the location of a touch. A signal is provided to the controller 216, shown in FIG. 1, in response to detection of a touch. The controller 216 and/or the processor 102 may detect a touch by any suitable contact member on the touch-sensitive display 110.

The detected touch actions may then be correlated both to user commands and to an element or elements displayed on the display screen comprised in the display interface 110. In response to the user command, the processor may take actions with respect to the identified element or elements. Touches that are capable of being detected may be made by various contact objects, such as thumbs, fingers, appendages, styli, pens, pointers and the like, although the selection of the appropriate contact object and its construction will depend on the type of touchscreen display interface 110 implemented on the device. Depending on the technology selected for the touchscreen display interface 110, the interface 110, by itself, may detect contact events on its surface irrespective of the degree of pressure applied at the time of contact. Pressure events, and varying degrees of pressure applied to the touchscreen display interface 110, may be detected using force sensors, discussed below.

As shown in FIG. 4, the housing 410 is shown, with the touchscreen display interface 110 comprising a touch-sensitive overlay 414 disposed over a display screen 418. The interface 110 is disposed on a tray 420. The tray 420 is provided with spacers 422 which may be flexible and compressible components, such as gel pads, spring elements, foam, and the like, which may bias the touchscreen display interface against the force sensing assemblies, or limit the movement of the display interface with respect to the housing 410. Disposed below the tray 420 is a base 452, which may comprise a printed circuit board for electrically connecting each of one or more optional force sensors 470 disposed thereon with the processor 102 or a separate controller in communication with the processor 102. Construction of force sensors 470 will be known to those skilled in the art, but it will be appreciated that force sensors are not required in all embodiments of touchscreen devices used in accordance with the teachings herein. The base 452, which may be mounted on the housing 410 by means of supports 454, may also provide support and electrical connections for one or more tactile feedback devices, such as piezoelectric actuators 460. The touch-sensitive display may thus be moveable and depressible with respect to the housing 410, and floating with respect to (i.e., not fastened to) the housing 410. A force *F* applied to the touchscreen display 110 would then move, or depress, the display 110 towards the base 452. Force as utilized throughout the specification, including the claims, refers to force measurements, estimates, and/or calculations, such as pressure, deformation, stress, strain, force density, force-area relationships, thrust, torque, and other effects that include force or related quantities.

As mentioned above, the user device may be provided with one or more of a number of user input interfaces, including, but not limited to: touchscreen interfaces, trackpads, trackballs, scroll wheels or thumbwheels, optical joysticks, QWERTY or quasi-QWERTY keyboards, numeric or symbolic keypads, convenience keys, switches, buttons including capacitive buttons or input surfaces, force sensors, other touch-sensitive surfaces, and the like. While in a locked state, one or more of these user input interfaces may be in an unpowered or inactivated mode, and incapable of detecting user input. The user input interfaces remaining in an active state and capable of detecting user input can be configured to receive a "wake-up" or unlock input, which in turn triggers activation of the other user input interfaces. In a device configured to receive an unlock command via a single user input interface only, the interface or interfaces remaining active may be selected not only according to their relative power consumption, but also the basis of the likelihood of unintended activation. For example, a trackball may not be left activated in sleep mode, as it is likelier to be actuated by accidental contact than a keyboard. Regardless, the use of a single user input interface to receive an input to trigger the device to exit can be prone to accidental activation, resulting in unnecessary consumption of a power source.

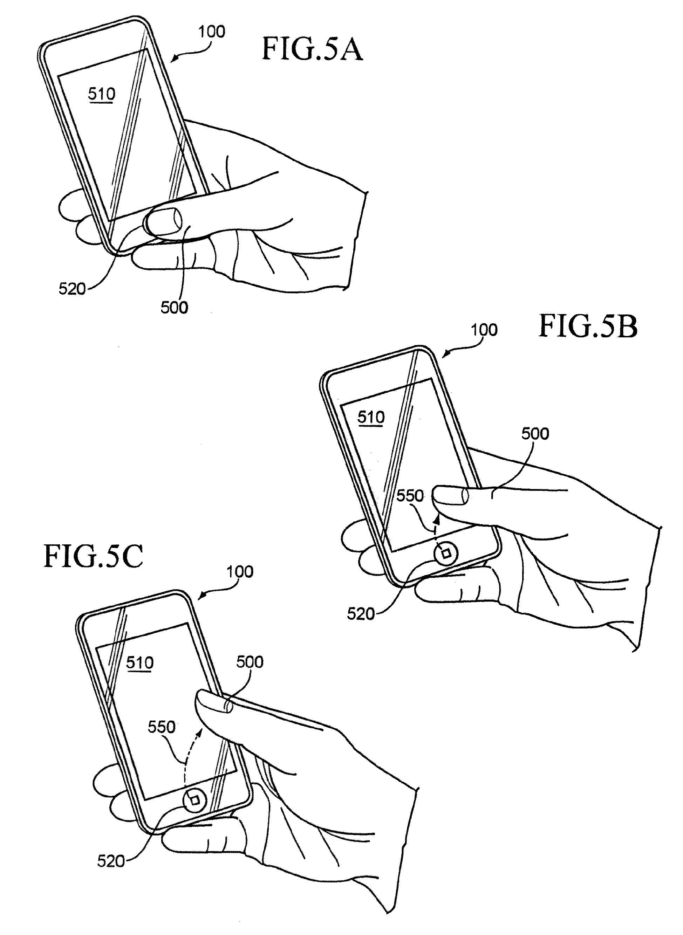

Accordingly, in accordance with the embodiments described herein, a method and a device configured for a single-gesture or continuous-action unlock input is provided. Turning to FIGS. 5A to 5C, an example of the single-gesture or continuous-action input is illustrated as it may be implemented on a handheld mobile device 100, such as a smartphone equipped with a touchscreen display 510. Of course, the embodiments described here need not be implemented on a smartphone only, but may also be implemented on the types of devices mentioned above. The device 100 in this example is also provided with a single "home" button or convenience button 520, positioned at the center along an edge of the display 510. As can be seen in FIG. 5A, the device 100 may be gripped by a user's hand (in this case the right hand) and is sized such that an adult user's thumb 500 is capable of depressing the convenience button 520 while the device 100 is held in the same hand, if the button 520 must be pressed in order to be actuated. The depression of the convenience button 520, in this example, constitutes the initiation of an unlock action.

FIG. 5B illustrates the same user's thumb 500, now traveling in an arcuate path 550 along the touchscreen display 510, upwards along the touchscreen display 510 and generally towards an edge of the display 510. FIG. 5C again illustrates the user's thumb, now having traveled along the arc 550 to an edge of the display 510 adjacent the edge of the display 510 along which the button 520 was located. The arc 550 traced along the touchscreen display 510 constitutes a completion of the unlock action. Upon the completion of the correct unlock action, the device 100 may enter the unlocked state. Thus, the unlock action in this example comprises at least two components, detected using two distinct user input interfaces: the initiation at the convenience button 520;

and the arc 550 traced on and detected by the touchscreen display 110. At the same time, however, the unlock action can be carried out as a substantially continuous action or single gesture by the user. To reduce power consumption, the device 100 may be configured to maintain sufficient power to the first input mechanism, the convenience button 520, so that it can detect a user input; upon detection of the input at the convenience button 520, the device then activates the second input mechanism, in this case the touchscreen display 110, so that the display 110 is capable of detecting further input from the user.

It can be seen from the illustrations of FIGS. 5A to 5C that this unlock action can be easily carried out in a substantially continuous action by the user's thumb, and even more so if the convenience button 520 need not be heavily pressed but instead accepts light presses or simple contact by a user (for example, if the button were a capacitive button). The unlock action, the selection of the user input interfaces used for the action, and the path traced during the course of the action in this example, and the other examples discussed below, may be predefined in whole or in part either as a default setting or by user configuration. By providing a device configured to detect an unlock action of this type, the likelihood of accidental unlocking is reduced, since the detected input must include at least two components that substantially match a predetermined input action for the device to be unlocked. Further, unlike other prior art methods of unlocking a device using two input mechanisms, the single action used in this embodiment is a substantially smooth, continuous action that can be easily executed by the user; in this example, using a single digit (the user's thumb 500), without requiring the user to change the position of the hand or the grip on the device 100. In addition, to ensure the likelihood that the action, when detected across the two input interfaces 520 and 510, is interpreted correctly as a single, continuous action, the device 100 may be configured to apply predetermined timing rules to the detected inputs. If the second input mechanism is inactive at the time of detection of the first component of the action, the device 100 can activate the second input mechanism in time to detect the second component.

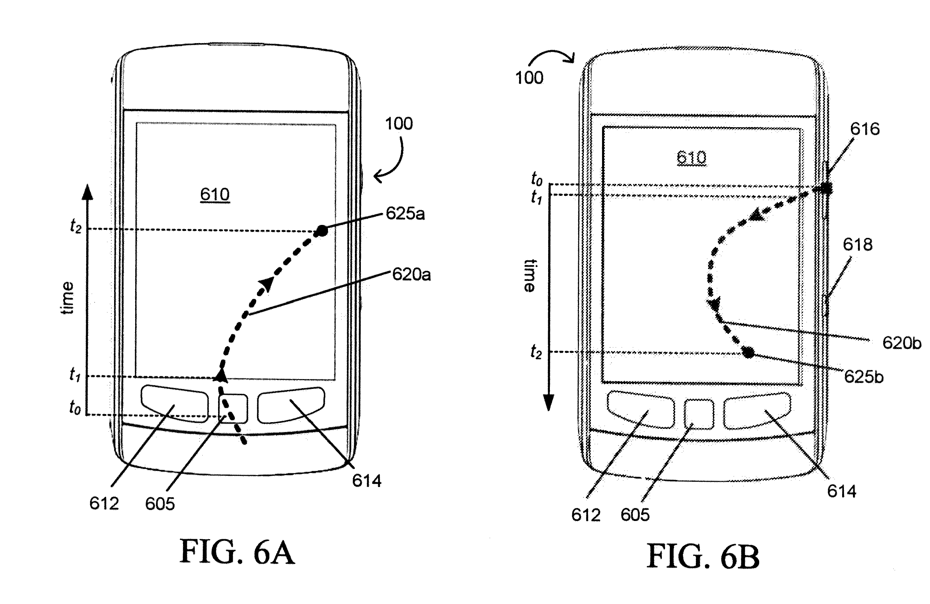

FIG. 6A shows an example of a single action similar to that illustrated in FIGS. 5A to 5C, applied to a trackpad 605 and a touchscreen display 610 of a smartphone. In this example, when the smartphone is in the locked state, the trackpad 605 remains active and able to detect user input. The single action, indicated by the broken line 620a, commences at time $t_0$ at the trackpad 605, where the user's finger or thumb (or other contact too, such as a stylus) initially contacts the trackpad 605, and then moves across the trackpad 605 generally in the direction of the touchscreen display 110. The trackpad 605 detects this input, and in response to this detected input, the processor 102 of the device 100 may then cause the touchscreen display 610 to be activated so that it is able to receive input as well. It will be appreciated that in some embodiments of a touchscreen device, only the contact or force-sensing assembly of the touchscreen interface may be activated; the actual LCD or other display element may remain inactive. Thus, the touchscreen display 610 need not be kept active while the device 100 is in the locked state, conserving battery power.

In FIG. 6A, it can be seen that the path of the input illustrated by the broken line 620a is obliquely angled from the edge of the smartphone and towards the edge of the touchscreen display 610, where it contacts the edge of the display 610 at time $t_1$. During this portion of the path between $t_0$ and $t_1$, contact with an input mechanism of the device 100 may be broken. At time $t_1$, contact resumes as the user's digit or other contact tool traces a path along the touchscreen display 610, to the endpoint 625a at time $t_2$, at which point contact with an input mechanism of the device 610 is again broken, as the user's digit or other contact tool has reached the edge of the touchscreen display 610. The path 620a is substantially smooth, and in this example may represent a path that is easily traceable by a user's thumb as it sweeps in an arc across the surface of the device 100 and across the first and second user input interfaces 605, 610. Upon detection of completion or substantial completion of the path 620a by the touchscreen display 610, the device 100 then enters an unlocked state, in which remaining user input interfaces may be activated, and device functions or data may be made available for access.

FIG. 6B illustrates another example of a single action input. In this example, the device 100 includes two convenience keys or rocker buttons 616, 618 disposed along a side of the device 100. One of these buttons, such as the rocker button 616, is maintained in an active state while the device 100 is in the locked state, and the unlock action commences with the button 616 being actuated at time $t_0$. If the touchscreen display 610 was inactive during the locked state, detection of the input at the button 616 may then cause the display 610 to be activated for the purpose of receiving input. At time $t_1$, contact is made at the touchscreen display 610, and the path 620b is traced along the surface of the device 610 to an endpoint 625b at time $t_2$. In this example, the endpoint 625b is not at the edge of the touchscreen display 610, but rather located at an interior point of the display. While the user may continue to trace a path extending beyond the endpoint 625b, in this embodiment the device 100 may interpret the input path 620b as the correct input of the second portion of the unlock action, and enter the unlocked state accordingly.

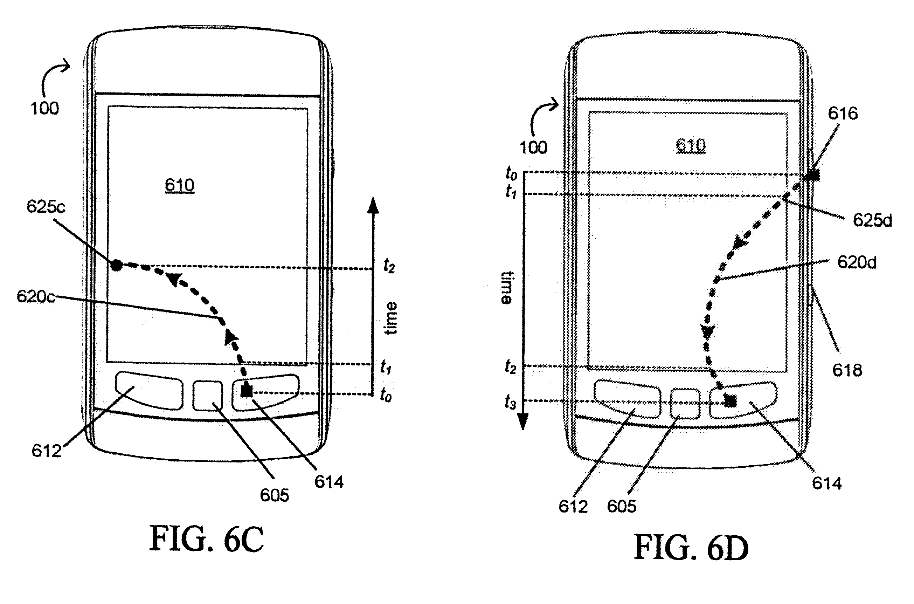

FIG. 6C illustrates a further example of a single action input using one of two or more physical keys 612, 614 on the device and the touchscreen display 610. The physical key used in this example, 614, is located proximate to the touchpad 605 and is similarly accessible by a user's thumb when the device is gripped in the user's hand. In this example, however, as the key 614 is located on the right-hand side of the device 100 and the path 620c is traced upwards and arcs towards the left edge of the device 100, this particular example is adapted to a user's left hand. In FIG. 6C, the key 614 remains active while the device is in the locked state, while the touchscreen display 610 may be inactive. The single action commences with a keypress on the key 614 at time $t_0$, although again, if the key 614 is a contact-sensitive key rather than a pressure-sensitive key, it may be actuated by simple contact rather than actual pressure on the key 614. In response to the detected actuation at the key 614, the device may then wake up the touchscreen display 610 to receive input. At time $t_1$, the device 100 can then begin detecting contact at the touchscreen display 610, starting at the edge of the display 610, and moving in an arc towards a side edge of the display 615c to the endpoint 625c at time $t_2$. Upon detection of completion or substantial completion of the path 620c by the touchscreen display 610, the device 100 then enters an unlocked state.

FIG. 6D illustrates another example of a single action input for unlocking a device; however, in this example, three input mechanisms on the device are used: the rocker button 616 located on the side of the device 100, the touchscreen display 610, and the key 614. The path 620d connecting these input mechanisms is again substantially continuous. The action begins at time $t_0$, at which point the rocker button 616 is actuated. Actuation of the button 616 may then trigger activation of the touchscreen display 610, if it is not already activated, to detect the next portion of the single action. The action then continues along the surface of the touchscreen display 610, and this contact may initially be detected at time $t_1$ where contact is made at the edge of the display 610. The contact continues along the path 620d down to the edge of the display 610 adjacent the button 614, at which point contact with the touchscreen display 610 may be broken at time $t_2$. At time $t_3$, the second button 614 is actuated, which completes the single action input. Although the input in this example includes three separate components, detected at three discrete input mechanisms, the input components may be processed and detected by the device 100 as a single action, as discussed below, and in response to the detection of this single action, the device 100 will then enter the unlocked state.

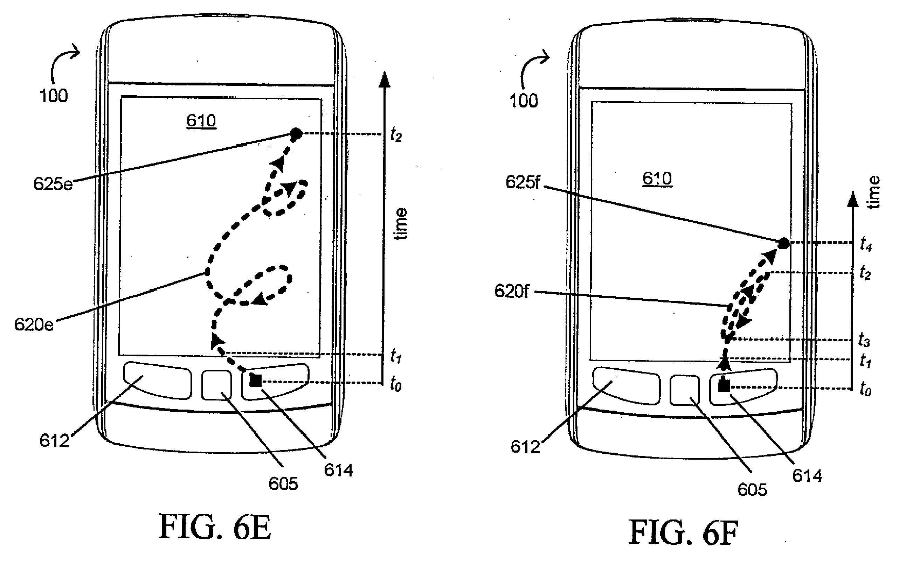

The paths traced on the touchscreen display 610 in the foregoing examples comprised simple curves. In other embodiments, the path traced on the display of a touchscreen device may be more complex. For example, in FIG. 6E a path 620e is illustrated that extends across an entire length of the touchscreen display 610. As with the example of FIG. 6C, the action commences with a keypress on the key 614 at time $t_0$, and in response to the keypress, the touchscreen display 610 may be activated if it is not already, and contact with the touchscreen display 610 may be detected at or around time $t_1$. The path 620e is traced over the surface of the display 610 and terminates at the endpoint 625e at time $t_2$. Upon detection of the complete or substantially complete path 620e by the touchscreen display 610, the device 100 may enter the unlocked state.

The path 620e is a complex shape rather than a simple route traced over the touchscreen display 610. This complex shape may be preconfigured by the user or an administrator as a password gesture or symbol. Thus, the single action extends over multiple input interfaces (the key 614 and the touchscreen display 610) to provide the benefit of a multiple-input factor unlock action, and is also usable in place of a PIN or password for the purpose of user authentication.

The device is configured to determine whether the detected inputs at the multiple input mechanisms-in these examples, a combination of two or more of the touchpad 605; the keys 612, 614; the rocker button or other side buttons 616, 618; and the touchscreen display 610-constitute a single action based on the timing or speed of the detected inputs. Returning to the simple example of FIG. 6A, it will be appreciated that there may be a gap period between time $t_0$ and $t_1$ during which no contact is detected by any input interface of the device, as the user's digit moves from the touchpad 605 to the touchscreen 615. It can be seen with reference to FIGS. 6B through 6F that this gap exists between all $t_0$ and $t_1$; in FIGS. 6B and 6D, the gap occurs as the path 620b passes from the rocker button 616 to the touchscreen display 610. This gap period may in fact be quite brief, as the physical separation between the two input interfaces may be quite small. The device 100 may be configured to measure the duration of the period during which no input is detected, and to determine whether the measured duration falls within an expected time value, subject to predetermined tolerances or errors. The expected value may be set as a default value, or configured through a training process, described below. If the measured duration falls within the expected range, then a first condition for a successful unlock action is met. For example, the measured duration $t_1 - t_0$ may be required to meet one of the following conditions:

$$t_1 - t_0 \leq g \qquad (1)$$

$$t_1 - t_0 = g \pm \varepsilon_1 \qquad (2)$$

In equation (1), $g$ is the predetermined expected duration of the gap period between the detection of the input at the second input mechanism and the detection of the input at the first input mechanism, and the gap duration measured by the device 100 is required to be less than or equal to that gap period. Thus, even if the detected gap period is faster than expected, the first condition will be successfully met. In equation (2), the measured gap period is required to be within a predetermined error range of $g$ defined by the error value $\varepsilon_1$. The first condition in this case will be successfully met only if the measured gap duration is found to be within the specified range.

The device 100 then awaits completion of the unlock action, in this case completion of the path 620a traced on the touchscreen display 110. The device 100 may detect one or more of the criteria of timing and path trajectory to determine if the unlock action was correct. For example, a second condition may be the requirement that the second component of the unlock action, the duration $t_2 - t_1$, be completed within a predefined time duration, meeting one of the following conditions:

$$t_2 - t_1 \leq p \qquad (3)$$

$$t_2 - t_1 = p \pm \varepsilon_2 \qquad (4)$$

where $p$ is the expected duration of the second input detected by the second input mechanism. In equation (3), similar to equation (1), the detected duration must be less than or equal to the expected duration. In equation (4), similar to equation (2), the measured duration $t_2 - t_1$ must be within a specified range of $p$, as defined by the error value $\varepsilon_2$. As with the value g, the value of $p$ may be preconfigured, for example through a training process. Further, error values $\varepsilon_1$ and $\varepsilon_2$ may be preconfigured as well. If both the first condition and the second condition are successfully met, the device 100 may then enter the unlocked state.

Where the unlock action involves a third or further user input interface, such as in the example of FIG. 6D, another gap period may occur at the transition between the second and the third user input interface, or between any user input interface and a subsequent input interface. In FIG. 6D, this second gap occurs between $t_2$ and $t_3$. A similar timing criterion can be applied to this gap period, such that the unlock action is successful only if the first, second and third conditions are met, where the third condition is a requirement that the second gap period $t_3 - t_2$ fall within a specified range, similar to that described above in respect of $t_1 - t_0$.

The above methods of determining whether the detected inputs meet the predefined conditions to unlock the device may be path independent, and rely only on timing of detected inputs, as described above. In other embodiments, particularly those involving a touchscreen device or a device provided with a trackpad or other touch-sensitive interface capable of tracking the position of a user's digit or a stylus, the device 100 may be configured to also detect and compare the path traced on the user input interface during the unlock action with a preset path already stored at the device 100. The preset path may have been previously defined by the user as a password symbol, and may be stored in a representative data form such as a set of x-y coordinate data representing locations on the touchscreen display 610 at which contact was detected. It will be appreciated by those skilled in the art that the password information subsequently stored need not be stored literally as a series of x-y coordinates. For example, the detected input may be processed to represent the symbol using one or more geometric primitives such as points, lines, curves and polygons, and data relating to the primitives may be stored instead. The data may or may not include timing data, such as the time elapsed from the detected beginning to the detected end of the path entry, or the time elapsed for completion of each segment of the path. Other suitable methods of processing user-input data of this nature will be known to those skilled in the art. The path data may or may not be stored in association with corresponding pressure data, i.e. data representative of a level of force applied by the user while inputting the path.

Thus, when the path is detected at the touchscreen interface 610 during the unlock action, the device 100 may compare the detected input path to the stored path data, and enter the unlocked state according to the results of the comparison. Comparison of the input path against the previously stored path data may be carried out using techniques similar to those generally known in the art for recognizing gestures input via a touchscreen interface. When the path is input during the unlock action, slight variations from the preset path stored in the device memory may be introduced, even if the user who is inputting the path is the same user who had previously defined the preset path stored in memory. The device 100 may be configured to accept the detected path as valid provided these variations fall within a predetermined tolerance. For example, the tolerance may simply be defined as a specific radius or margin of error on either side of the lines defined in the originally entered path; provided the input path is within this margin, it may be deemed a match.

FIG. 6F illustrates another complex path 620f in a single unlock action, in which verification of the second component of the action at the touchscreen display 610 may include an evaluation of the timing of events occurring within the second component. In this example, the action commences with actuation of the key 614 at time $t_0$, after which the touchscreen display 610 may be activated if it is not already activated. The action then extends in a path 620f from a first edge of the touchscreen display 610 to another edge of the display, from time $t_1$ to time $t_4$. However, the path includes additional vertices, caused by a reversal of direction of the path, which occur at times $t_2$ and $t_3$. Despite the complexity of the path 620f, it may still be possible for a user to trace the path from the key 614 to the endpoint 625f with the thumb of the hand gripping the device without requiring the user to lift and reposition his or her thumb. The touchscreen display 610 detects this complex path 620f as it is traced on the surface of the display 610, and in this case the processor of the device 100 may be configured to detect the vertices indicated at times $t_2$ and $t_3$ in addition to the beginning and end of the path segment detected by the touchscreen display 610. The device 100 may determine that this component of the single action is successfully completed if the duration of $t_2$ to $t_3$ falls within a predetermined range, in addition to other durations such as $t_1$ to $t_4$ or $t_3$ to $t_4$.

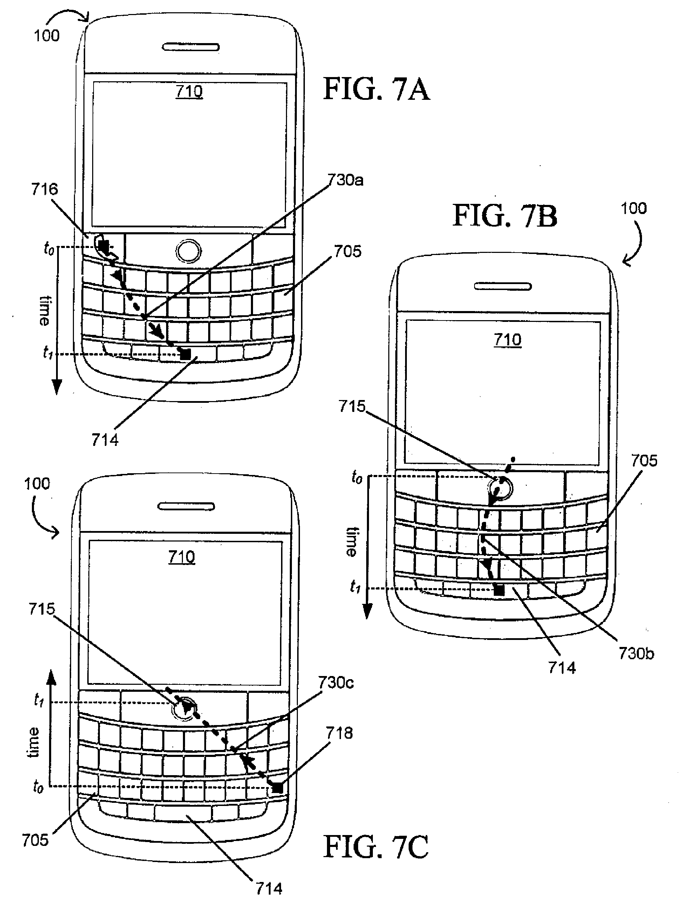

The multiple-factor unlock action is not restricted to touchscreen devices. FIGS. 7A to 7E illustrate further examples where the action is used to actuate non-touchscreen user interface mechanisms, such as a trackball or a key on a keyboard. In FIG. 7A, a mobile communication device 100 with a non-touchscreen display 710 is shown. The device 100 is provided with a physical QWERTY or quasi-QWERTY keyboard 705 including a space key 714, which is typically located in a lower region of the keyboard 705, at or near a center position. The device also includes a trackball 715 (indicated in FIG. 7B) and one or more buttons 716. In the example of FIG. 7A, the button 716 may be a phone key, which can be actuated while the device 100 is in an unlocked state to initiate an outgoing telephone call or to answer an incoming call. A path 730a is defined between the phone key 716 and the space bar 714. In this example, the keyboard 705 may be inactive while the device 100 is in a locked state, while the phone key 716 remains active. The single action to unlock the device 100 commences with actuation of the phone key 716 at time $t_0$, which then triggers the processor to activate the keyboard 705. At time $t_1$ actuation of the space bar 714 is detected. While the user's thumb or finger used to actuate these two buttons 716, 714 does not necessarily contact any of the intervening keys on the keyboard 705, the path 730a over which the user's thumb or finger would travel can be envisioned or presumed based on the timing of the actuation of the two buttons 716, 714. Thus, as in the previously described examples, the device 100 may be configured to determine whether the detected inputs constitute a correct two-factor unlock action by comparing the duration $t_1$ - $t_0$ with a predefined value, optionally subject to an error range or tolerance.

FIG. 7B illustrates another embodiment of a single action that may be used to unlock the device 100, this time using a trackball 715 and the space key 714 of the keyboard 705. The path of the single action 730b therefore extends between the trackball 715 and the space key 714. As indicated by the broken line, the path 730b is curved, which represents the likely path taken by the tip of a user's thumb as it moves in a single action from time $t_0$, the first point of contact at the trackball 715, to the second point of contact at time $t_1$ at the space bar 714. In some devices 100, the use of the trackball 715 as the first user input interface device to be actuated during an unlock action may be less desirable, since the trackball 715 may be easily jostled inadvertently, thus waking up the second input interface (in this case the keyboard 705). Accordingly, a path oriented in the other direction-from a keyboard key to the trackball 715-may be more desirable, since the trackball 715 may be inactivated during the sleep state. This alternative is shown in FIG. 7C, in which the path 730c extends from a first user input interface, the key 718 which may be the return key on a QWERTY or QWERTY-style keyboard, and in a straight line towards the trackball 715. Thus, the timing of the single action can be defined as the difference between $t_1$ and $t_0$, as indicated in the drawing. In the foregoing examples, if the time period $t_1$ - $t_0$, falls within a predetermined range, the device 100 may then enter the unlocked state.

It will be appreciated by those skilled in the art that measurement of the duration of the gap period between inputs need not be the only means by which inputs at distinct user input mechanisms of the device 100 are determined to represent a single action or continuous action; the measurement of this duration need not be used at all. Other factors that may be used to determine whether a successful unlock gesture has been detected include a determination of the apparent physical continuity of the inputs detected (i.e., whether the starting point of the second input detected by the second input mechanism generally corresponds to the endpoint of the first input detected by the first input mechanism; for example, with reference to FIG. 6C, whether the location of the touchscreen 610 contacted at $t_1$ corresponds to the position of the button 614 that was initially actuated as the first input); the overall speed of the detected inputs (for example, again referring to FIG. 6C, whether the speed of the path 620c traced by contact on the touchscreen 610 was within a predefined range, or alternatively whether the complete path traced from the button 614, to the end of the path at 625c, was completed with a speed within a predefined range, or within a time period within a predefined range); and the accuracy of the path traced on a touchscreen or touchpad when compared to a predefined, pre-stored path. One or more of these various factors may be used to determine whether the appropriate user inputs were detected at the distinct user input mechanisms. It will be appreciated that measures of speed or timing may depend on the physical configuration of the device 100, and the distance between its various input mechanisms.

In certain embodiments, not only the timing, but also the angle of the path of the single action and may be used to prevent unauthorized access to the device. In the example of FIG. 7C, the angle of the path 730 is approximately a straight line segment, angled at about 45°. This angle is determined by the relative position of the first input user interface-in this case, the return key 718-to the second input user interface, in this case the trackball 715. Thus, the second input comprised in this single action may be defined as a detected motion of the trackball 715 substantially in the same direction as that indicated by the path 730c. Accordingly, the device 100 may be placed in the unlocked state if three conditions are satisfied: first, that the correct two user input interfaces are actuated in the correct order; secondly, that the second detected actuation takes place within a predetermined period of time after the first actuation is detected; and third, that the second detected actuation detects movement on the part of the user, or is actuated itself, in a same or substantially same direction as the path leading from the first user input interface to the second. Thus, in FIG. 7C, since the trackball 715 is being moved in substantially the same direction as the direction defined by the first user input interface 718 and the second user input interface 715, the unlock action is successful, and the device may then be unlocked.

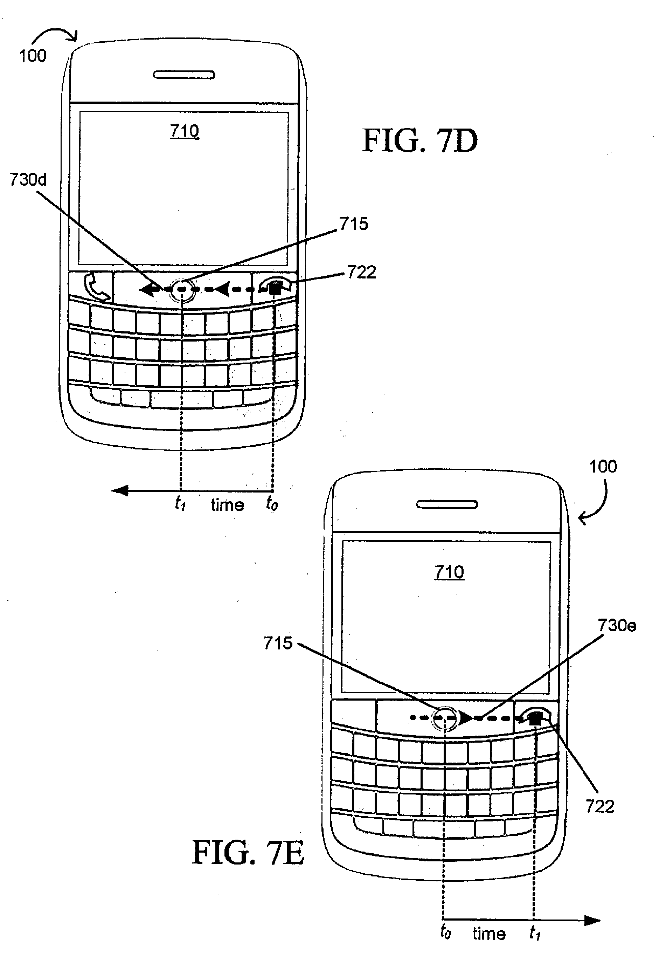

FIGS. 7D and 7E illustrate still further examples of two-input device unlock actions. In FIG. 7D, a second button (here the end call key 722) is identified as the first user input interface, and the trackball 715 as the second user input. Conversely in FIG. 7E, the first user input interface is the trackball 715, and the second user input interface is the end call key 722. In both cases, the detected unlock action is determined to be proper if the time difference $t_1 - t_0$ for each of FIGS. 7D and 7E is within a predetermined range. In addition, the detected unlock action may only be proper if the direction of movement directed by the trackball 715 is in the same orientation as the line segment connecting the first and second user input interfaces. These embodiments therefore provide more protection against accidental unlocking of the device, by ensuring that a combination of actions-executable by the user in a single transaction-is required to access certain device data and functions.

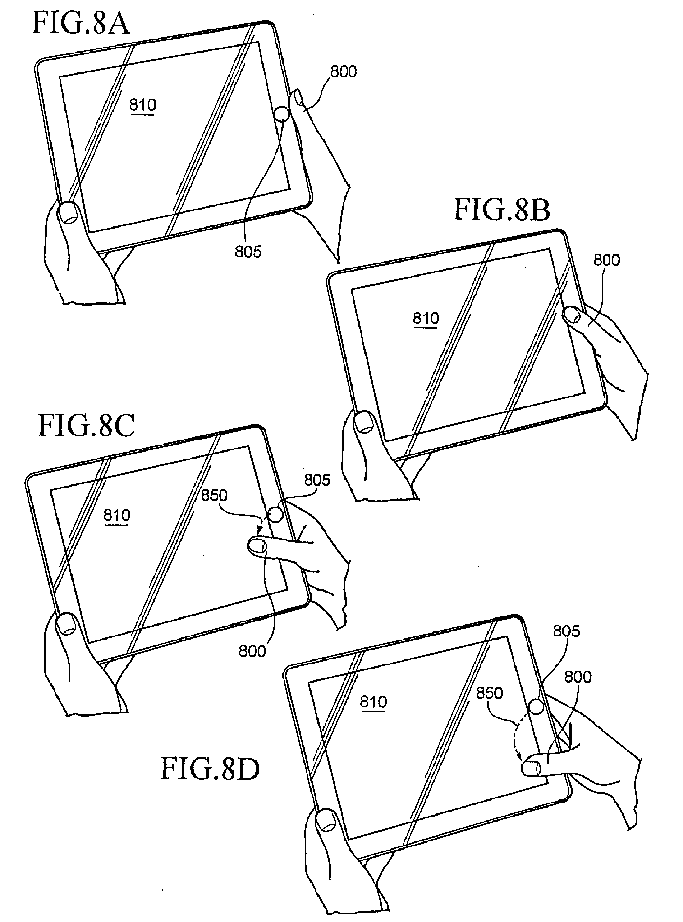

The foregoing unlock actions need not be restricted to a small handheld device, nor need they be restricted to a particular orientation (in the aforementioned examples the figures are oriented such that devices are in "portrait" mode, having a greater height than they are wide). FIGS. 8A through 8D illustrate a tablet computer held in "landscape" mode, in which the display 810 is oriented as it is observed by the user to be wider across the display than it is tall. In this set of examples, the device 100 includes a home button or convenience button 805 disposed along an edge of the device 100 as well as a touchscreen 810. FIG. 8A illustrates a possible starting position prior to commencement of the unlock action. In FIG. 8B, an unlock gesture is initiated by the user's thumb 800 depressing the home button. At FIG. 8C, the beginning of a path 850 traced from the position of the home button 805 to an endpoint, shown in FIG. 8D, is illustrated. It can be seen from these illustrations that the action of pressing the button 800 and tracing the remainder of the unlock action may be carried out by a single digit, such as the user's thumb, while the device 100 is gripped by the user's two hands.

It will be understood by those skilled in the art that when the second user input interface is dormant or inactive while the device 100 is in sleep mode, upon detection of the first actuation at the first user input interface, activation of the second user input interface may not be immediate; there may be some small, and in some cases noticeable, lag between the time the actuation of the first user input interface is detected and when the second user input interface is activated and capable of detecting user input. In some embodiments, the amount of time $t_1 - t_0$ that elapses between the first actuation and the commencement of the second actuation is sufficient for the second user input interface to be woken up and sufficiently powered to detect an input. For example, in FIG. 7A, the time elapsed in moving the user's thumb or other digit from the phone key 716 to the space bar 714 may be sufficiently long that the fact that the keyboard 705 may not have been instantaneously activated may not be noticed. In other embodiments, particularly those involving touchscreen devices, the lag in activating the second input may be taken into account when determining whether the unlock actions fall within predetermined specifications.

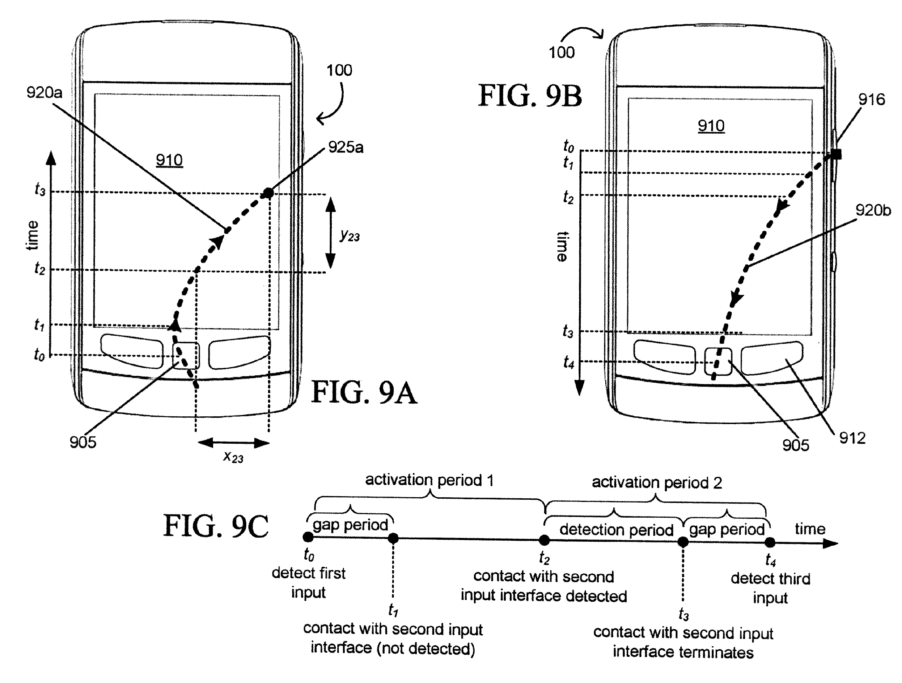

FIG. 9A illustrates a further device 100 with a touchscreen display 910. Similar to FIG. 6A, the path 920a extends from a touchpad 905 to an edge of the display 910, marked as 925a. At $t_0$, user input at the touchpad 905 is detected. The path traced by the user then follows 920a, and at time $t_1$, the path reaches the touchscreen display 910, where notionally the touchscreen display 910 may begin detecting contact on its surface. However, because the time period $t_1 - t_0$ is so short, there may not be sufficient time for the display 910 to commence detection at $t_1$. Instead, the display 910 may only be ready to begin detecting input at *time $t_2$,* and will therefore only detect input between the times $t_2$ and $t_3$.

Similar delays may be encountered when the path moves from a touchscreen display 910 to a further user input interface. Turning to FIG. 9B, another example of a path 920b extending from a side button provided on the device, such as the rocker button 616, over the touchscreen display 910 and ending at a further button or key 912 is shown. While the path moves from the starting position at the button 916 to the touchscreen display 910 within the time period $t_1 - t_0$, again, this time period may be too short for the touchscreen display 910 to be activated in response to the detected input at the button 916 at time to. Rather, the display 910 may only be activated by time $t_2$, and so will only be able to detect input between the times $t_2$ and $t_3$. Similarly, another gap period occurs between times $t_3$ and $t_4$, where the path 920b moves from the touchscreen display 910 to the touchpad 905. Depending on when activation of the touchpad 905 is triggered, the touchpad 905 may be able to detect input as soon as the path reaches the touchpad 905. For example, activation of the touchpad 905 could occur upon detection of the input at the button 916 at $t_0$, or else upon commencement of detection of input on the touchscreen display 910 at $t_2$.

The timing in these examples is illustrated schematically in FIG. 9C. The illustrated timeline includes time

instances $t_0$, $t_1$, $t_2$, $t_4$, and $t_5$. When the device 100 starts in a locked state, only a first user input interface may be active and capable of detecting input at time $t_0$. Upon detection of the input at the first interface, the second user input interface may be activated, although its activation will not be instantaneous. At the same time, as described above in respect of FIGS. 9A and 9B, the first period of time, $t_0$ to $t_1$, is a gap period between the detection of the first input and initial contact with the second input interface. However, the second input interface may not detect any input until time $t_2$, when the second interface is activated. Thus, in order to place the device 100 in an unlocked state, one of the conditions that must be complied with in this example is:

$$t_2 - t_0 \leq g' \qquad (5)$$

$$\text{or} \qquad )$$

$$t_2 - t_0 = g' \pm \varepsilon'_1 \qquad (6)$$

$$)$$

where $g'$ is the expected delay in activating the second input interface after detection of actuation of the first input interface. The gap duration measured by the device 100 is required to be less than or equal to that gap period, as set out in equation (5). Alternatively, the measured gap of $t_2 - t_0$ may be required to be within a predetermined error range of $\varepsilon'_1$, as indicated in equation (6), where $\varepsilon'_1$ is an error value. This period $t_2 - t_0$ may be referred to as an activation period for the second input interface.

At time $t_2$, actuation at the second input interface, which in the examples of FIGS. 9A and 9B is the touchscreen display 910, is detected. In the case of a touchscreen display 910, an additional detection period lasting from $t_2$ to $t_3$ is expected, during which time the contact due to the portions of the paths 920a, 920b between $t_2$ and $t_3$ may be detected. At $t_3$, contact at the touchscreen display 910 ends. In the case of FIG. 9A, input of the unlock action is then complete, and so the input may result in the device 100 exiting the locked state and entering the unlocked state if one of equation (5) or (6) is satisfied, and:

$$t_3 - t_2 \leq p' \qquad (7)$$

$$\text{or} \qquad )$$

$$t_3 - t_2 = p' \pm \varepsilon'_2 \qquad (8)$$

$$)$$

where $p'$ is the expected duration of the second input detected by the second input mechanism. In equation (7), the detected duration must be less than or equal to the expected duration. In equation (8), the measured duration $t_3 - t_2$ must be within a specified range of $p'$, as defined by the error value $\varepsilon'_2$, which also may be predetermined. Again, the value of $p'$ may be preconfigured.

As noted above, in some embodiments, the conditions for entering the unlocked state are path-dependent. The device 100 may have prestored data representative of the path 920a, 920b traced on the touchscreen display 910 and may require that path detected between times $t_2$ and $t_3$ substantially match the previously stored match; alternatively, the detected path may be required to match only one parameter of a previously stored path. For example, the device 100 may determine a value representative of the distance traversed either horizontally or vertically along the display 910, or both (e.g., either $x_{23}$ or $y_{23}$, or both) and compare these values with previously stored path data. If the measured traversed distances match the stored distances within a specified tolerance and other timing criteria discussed above is met, then the device 100 enters the unlocked state. It will be appreciated by those skilled in the art that the comparison of distances and timing criteria may be integrated. For example, based on the traversed distance information and the timing information, a speed value may be computed, and this speed value may be compared with a previously stored speed value derived from a previously input path. In a further embodiment, combined with data identifying the contact locations on the touchscreen display 910, velocity information may be derived and compared with previously stored velocity information.

Returning to FIG. 9C and the example of FIG. 9B, input of the unlock action is not complete at time $t_3$; instead, another gap period occurs between $t_3$ and $t_4$ as the distance between the second user input interface, the touchscreen display 910, and the third user input interface, the touchpad 905, is traversed. In this example, again the third user input interface must be activated to receive user input. Activation of the third interface may occur at substantially the same time as activation of the second user input interface; in other words, detection of the first input at time $t_0$ may be used to initiate activation of the second and third user input interfaces so that there is no lag in the third interface's ability to detect input. Alternatively, to reduce power consumption, the activation of the third user input interface may be initiated upon detection of contact at the second input interface, as the detected contact at the second interface indicates that it is likely that the user is indeed inputting an unlock command. Accordingly, the activation period for the third user input interface may run from *time $t_2$ to $t_4$*. At time $t_4$, actuation of the third input is detected.

Thus, for the device to be unlocked in the example of FIG. 9B, in addition to one of equations (5) or (6) and one of (7) or (8) (and/or a path-dependent criterion, as described above in respect of FIG. 9A) being satisfied, a further criterion of:

$$t_4 - t_3 \leq g'' \qquad (9)$$

or

$$t_4 - t_3 = g'' \pm \varepsilon_3 \qquad (10)$$

must be satisfied, where $g''$ is a predefined gap duration, and $\varepsilon_3$ is an error value, which may also be predetermined.

Thus, it can be seen that the foregoing methods and devices are configured to permit the device 100 to transition from a locked to an unlocked state not simply on the basis of a single type of input, such as a keypress or a single touchscreen gesture, but on the basis of a two-input or multiple-input action that must be detected across a plurality of user input interfaces provided on the device 100, timed such that the detected portions of the action at each of the plurality of user inputs can be construed to be a continuous action on the basis that they occur within a predefined time limit. In a further embodiment, the two inputs may be applied against the same input mechanism, such as two or more keys of a single keyboard input mechanism, or through manipulation of a single input mechanism in two or more different ways. For example, a scroll wheel or a trackball may be capable of being actuated either by depressing the wheel or trackball, or by rolling it in one or more directions. Thus, in this further embodiment, multiple types of inputs may be received via a single input mechanism, but still interpreted by the device as an unlock gesture (or a lock gesture, as discussed below) if the multiple types of inputs correspond to a continuous action or predefined timing as described herein.

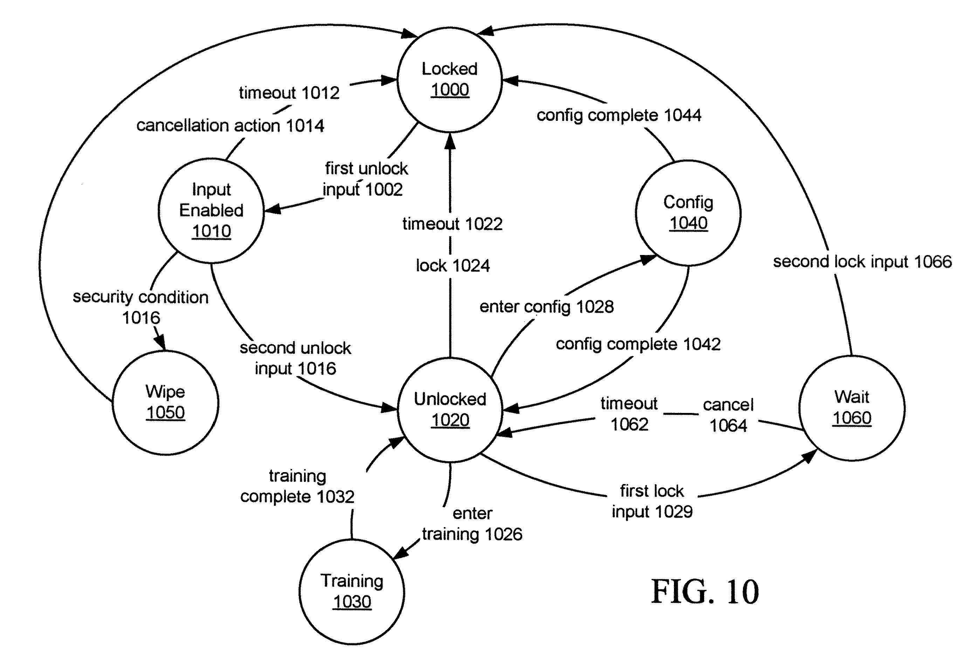

FIG. 10 illustrates the various states of a device implementing a two-input unlock action as described above. The device typically begins in an initial locked 1000 or unlocked 1020 state, although it may begin at a different state. While in the locked state 1000, as described above only minimal user input interfaces may be activated to receive a user input. The device may transition to an input enabled state 1010 in response to a detected user input at one of the activated interfaces 1002. While in the input enabled state 1010, the device activates a further input interface, and awaits further input. In this state, the device may detect either a timeout 1012-because no input at all was received at the second user input interface-or else may detect a cancellation action, for example the actuation of a standby button or command. The device would then return to the locked state 1000. In some embodiments, repeated errors detected during the input enabled state 1010-for example, repeated incorrect entry of the second input-may result in a detection of a security condition 1016 in which the device is automatically locked down and optionally transitioned to a wipe state 1050, where user data on the device may be deleted and/or encrypted, and access to device functions is limited. The device may then transition to the locked state 1000 again upon exiting the wipe state 1050.

In the input enabled state 1010, the device may also detect input of the second unlock input 1016, and upon verification or successful comparison to predetermined criteria (such as the timing discussed above), enters the unlocked state 1020. In this state, all the remaining user input interfaces at the device may be activated, and functions and data at the device may be made available to the user as well. From the unlocked state 1020, the device may reenter the locked state 1000 as a result of another timeout 1022 (i.e., inactivity of any user input interface for a predetermined period of time), or in response to a lock command 1024.

The device may also enter a configuration 1040 or a training state 1030 from the unlocked state 1020. In these states, the criteria for detecting an unlock action (or a lock action, as discussed below) are set at the device. The device may transition to the configuration state 1040 in response to a command 1028 input at the device itself, or in response to a command received from the host system 250, if the configuration is initiated by an administrative function at the host system 250. In the configuration state 1040, data for use in detecting the user inputs across the various input interfaces of the device, such as the expected maximum gap period durations, are loaded onto the device. Upon completion of the configuration, the device exits the configuration state 1040 and may then return either to the unlocked state 1020 or the locked state 1000 in response to a configuration complete indication 1042, 1044. The training state 1030 may be entered from the unlocked state 1020 in response to a command received at the device 1026. In the training mode, discussed below, a user may configure the inputs to be detected for the unlock action. The training mode 1030 is exited upon detection of a training complete indication 1032.

In a further embodiment, described below, a similar multiple-factor input action may be used to lock the device. Thus, from the unlocked state 1020, a first component of a lock action 1029 may be detected, at which stage the device enters a wait state 1060 during which it awaits a further input to determine whether the first component constitutes the first part of the lock action. If the expected second component of the lock action 1066 is detected, then the device transitions to the locked state 1000. If, however, a timeout 1062 occurs or a different action or input 1064 than the expected second component of the lock action is detected, then the wait state 1060 is cancelled and the device returns to the unlocked state 1020.

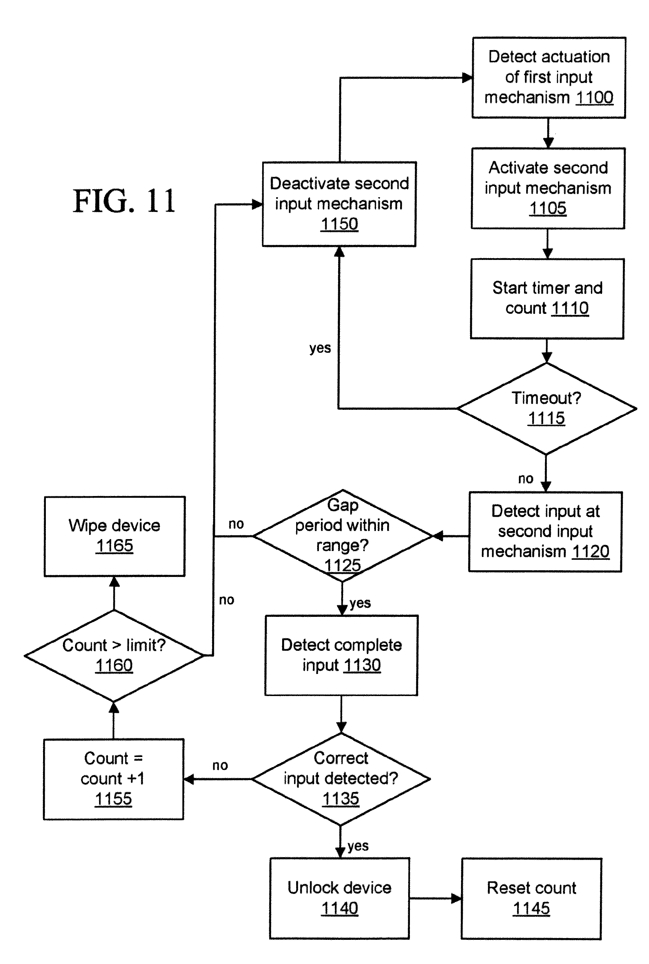

A process implementing the unlock mechanism described above is illustrated in the flowchart of FIG. 11. At 1100, actuation of the first user input interface, which remains active during the locked state, is detected. At 1105, in response to this actuation, the second user input interface is activated, and a timer is started at 1110, and optionally a failed unlock attempt count as well. The device then awaits input at the second input mechanism 1120. However, there may be a preconfigured timeout period set; if the device does not receive the second input within a predetermined period of time, at 1115 the device determines that there is a timeout condition, deactivates the second user input interface at 1150, and returns to the locked state, in which it awaits actuation of the first user input interface again at 1100. If, however, the second input is detected at the second user input interface at 1120, it determines first if the detected gap period (e.g., the difference $t_1$-$t_0$ or $t_2$ - $t_0$) is within the expected range at 1125. If it is not, then again the device may deactivate the second user input mechanism at 1150 and return to the locked state.

If the gap period is within the expected range, then at 1130 the device completes detection of the second input (for example, if the second user input interface is a touchscreen interface, then the device must await completion of the gesture or path traced on the touchscreen surface). At 1135, it is determined whether the correct input was received. This may include determination whether the correct second input interface was actuated, and in the case of a touchscreen gesture or path, whether the correct path was entered based on timing or positional information, as discussed above. If the correct input was indeed received, then at 1140 the device is unlocked, and the failed unlock attempt count, if it was initiated, is reset at 1145. If the correct input was not received, then at 1155 the failed unlock attempt count, if it is used, is incremented, and a determination is made whether the count exceeds a predetermined limit (for example, a series of five or ten failed attempts to unlock the device may result in a security condition). If the count exceeds the limit, then at 1165 the device may be wiped, or some other security response may be implemented, such as encrypting the data on the device.

A similar action to the unlock action may also be used to lock the device as well. Since the action is detected across multiple input mechanisms of the device 100, and since the device 100 at the time of detection of the first lock may be executing an application or operating system function that receives input via the same input interfaces that receive a lock input, to reduce the likelihood of an undesired response from the device 100 upon receipt of the lock input, the device may be configured to either receive the first lock input using a less frequently used user input interface or to use a first lock input that has less impact on the operation of the device, or else the device may be configured to cache a current state of the application data or user interface state pending detection of the second lock input.

For example, the unlock path 730a defined in FIG. 7A is initiated at the phone key 716, and terminates at the space bar 714. Actuation of the phone key 716 while the device is unlocked is typically expected by the user to result in immediate invocation of a phone application. Accordingly, it may be preferable to have the device 100 respond as expected, rather than to await a further lock input. By contrast, actuation of the end call key 722 shown in FIG. 7D is typically expected to have an effect only if a current call is ongoing at the device 100; accordingly, use of the end call key 722 as the first user input interface may be a preferred choice over the phone key 716.

As another example, the path 730b defined in FIG. 7B is initiated with a trackball 715 movement, then a keypress at the space bar 714. The impact of scrolling due to trackball movement is less significant; typically, the only effect of scrolling is to move focus in the graphical user interface displayed at the device to a different element, or to scroll the content displayed in the display 710 upwards or downwards (or side to side) in response to the direction of the trackball movement. If the lock action uses this type of input as the first input, then the device 100 may be configured to cache the current state of the graphical user interface and application data upon detection of the first input, but respond to the first input as usual (i.e., scroll the display or move focus, etc.). If a subsequent input corresponds to the lock action, then the device 100 may proceed to enter the locked state, and the currently cached state of the graphical user interface and application data may be maintained and reloaded when the device 100 is later unlocked. If subsequent input (or lack of subsequent input) indicates that the input was not intended to be a lock input, then the cached data is discarded.

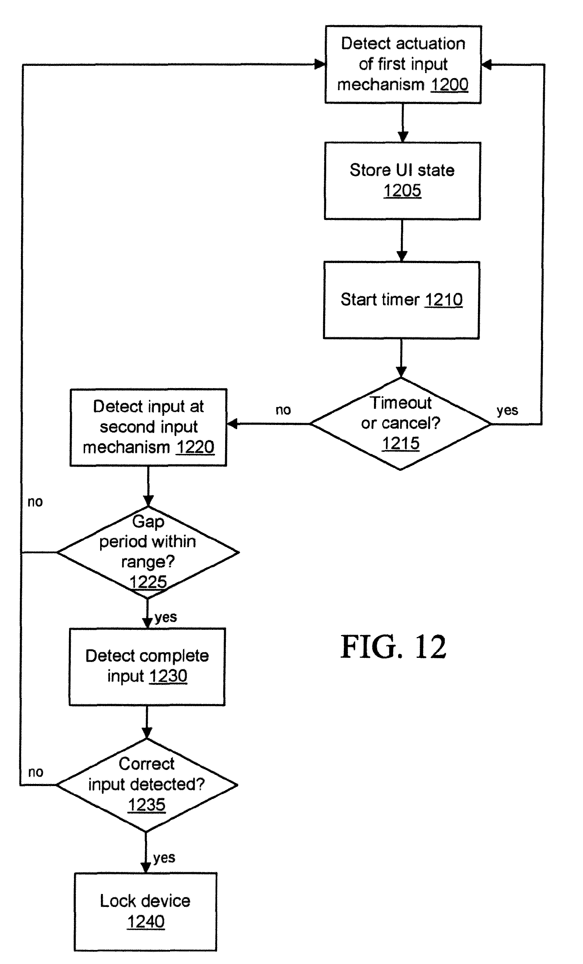

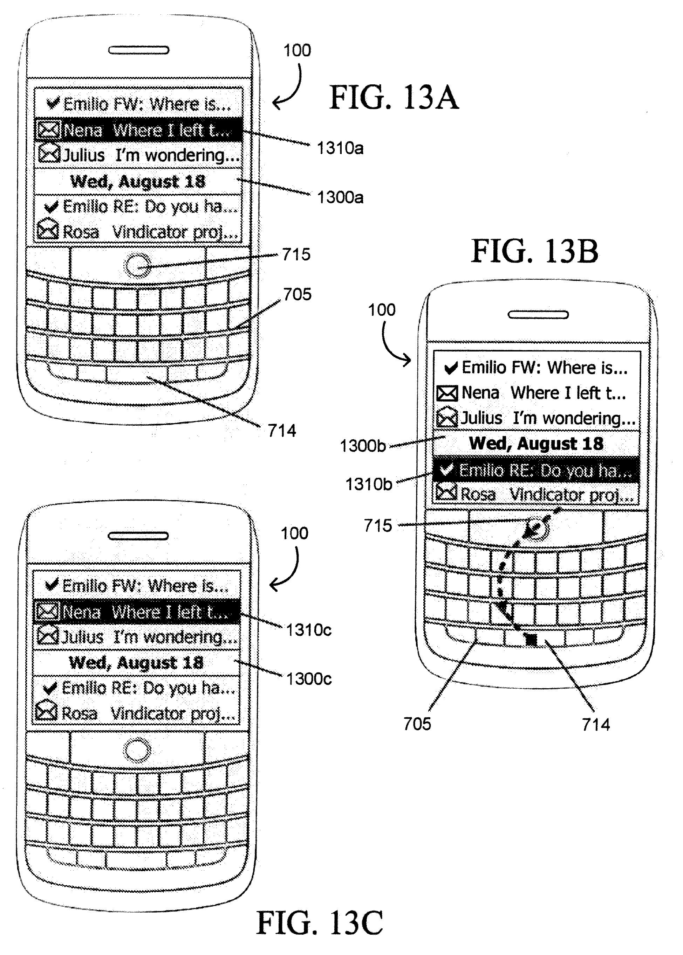

This process is illustrated in FIG. 12 and FIGS. 13A to 13C. In FIG. 12 at 1200, actuation of a first input mechanism is detected at the device. At this point, the graphical user interface may be in a first state, such as that shown in FIG. 13A. In the example of FIG. 13A, the graphical user interface 1300 displays a message listing, with one entry 1310a highlighted, denoting that it is in focus. The current state of the device is then stored at 1205, which here includes an identification of the user interface element in focus in the display, as well as information about the current screen displayed at the device. At the same time, the device 100 may respond to the first input in the manner that the currently executing application or currently displayed graphical user interface is configured to respond; thus, after the current state of the device is cached at 1205, the graphical user interface of the device 100 may be altered as shown in FIG. 13B. In FIG. 13B, the focus in the graphical user interface 1300b has been moved to a different element 1310b, as a result of movement of the trackball 715, which in this example is the first user input interface.

At 1210, a timer is started to detect the timing of the second component of the lock action. A timeout value may be associated with the timer; if the timeout is detected at 1215, then the device may delete the cached state information and return to 1200 to again await actuation of the first input interface. Alternatively, if a different action than the expected second input of the lock action is detected, this may be interpreted as a cancellation instruction, and again the device 100 may delete the cached state information and return to step 1200.

If, however, the second input is detected at the second user input interface at 1220, it is then determined at 1225 whether the timing of the detected second input was received within the expected time period. If not, again the device may delete the cached state information and return to 1200 to await actuation of the first input interface again. If the second input was detected within the predetermined period, then at 1230 detection of the complete input is carried out, and at 1235 it is determined whether the expected second component of the lock input was detected. If not, again the device may delete the cached state information and return to 1200. If the correct lock input was detected, then at 1240 the device may enter the locked state. Upon unlocking, the device may then use the cached state information to restore the device 100 to the state as of the time the first input was detected at 1200. Thus, the device 100's display may resemble FIG. 13C, where the graphical user interface 1300c again shows the same message listing as FIG. 13A, with the same message 1310c in focus as shown in FIG. 13A.

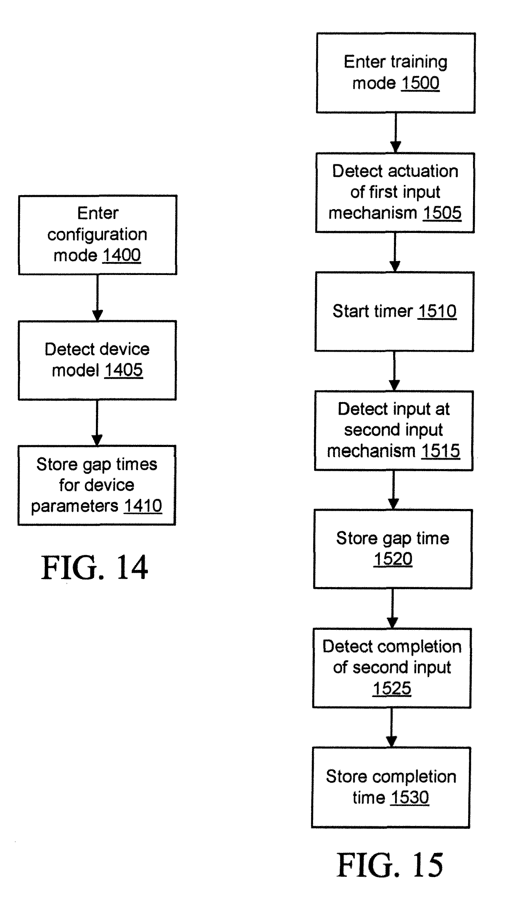

As mentioned above, the device 100 may be configured with the appropriate conditions and parameters to detect the lock and unlock actions. These parameters may be adapted to the particular form factor and physical layout of the device 100; for example, the predefined gap period (such as $t_1 - t_0$ or $t_2 - t_0$) may differ according to the relative distance between the buttons and/or touchscreen display of the device, and the response of the touchscreen or other user interface components when activated. Thus, when the device 100 is configured, as shown in FIG. 14 the device first enters a configuration mode at 1400; this mode may be invoked at the device 100 itself, or in response to a command received from the host system 250. At 1405, the current device model, which may be used to identify the correct parameter and condition set, is determined. The correct information for the device model is then retrieved, for example from a data store at the host system 250, then stored at the device at 1410.

Similarly, the lock or unlock action may be configured by a user at the device 100. Turning to FIG. 15, a process for training the device 100 is shown. At 1500, the device 100 enters a training mode, for example in response to an express command received at the device. The device 100 is then placed into a state in which it is ready to receive user input and store this input as the lock or unlock action. At 1505, actuation of the first user input interface is detected, and a timer is started at 1510. At 1515, a second input is detected at a second user input interface. Upon detection of this second input, a time index is stored at 1520; this time index represents the initial gap time required for the user to traverse the device from the first input mechanism to the second. Once the completion of the second input is detected at 1525, the completion time is stored at 1530. An identification of the particular user input interfaces used during the training mode is also stored in association with the time data. In addition, particularly where an input is entered via a touchscreen interface and the unlock or lock action is path-dependent, path information for that input may be stored as well as timing information.

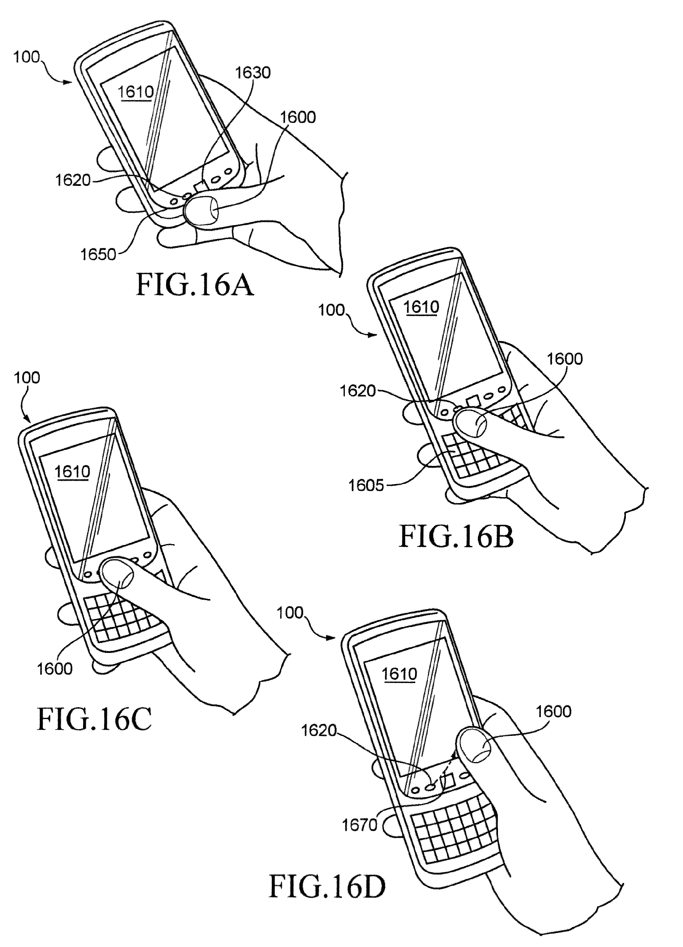

The systems and methods disclosed herein are presented only by way of example and are not meant to limit the scope of the subject matter described herein. Other variations of the systems and methods described above will be apparent to those in the art and as such are considered to be within the scope of the subject matter described herein. For example, it should be understood that steps and the order of the steps in the processing described herein may be altered, modified and/or augmented and still achieve the desired outcome. Further, different device configurations may be used with the within embodiments. FIGS. 16A through 17D illustrate unlocking and locking of a "slider" smartphone, which may be provided with a touchscreen display (1610 in FIGS. 16A through 16D) as well as a physical keyboard 1605 (shown in FIG. 16B) that is revealed by sliding a portion of the device bearing the touchscreen display 1610 away from the keyboard. The action of opening the device by actuating the slider mechanism and sliding the touchscreen display 1610 to reveal the keyboard, or of closing the device by sliding the touchscreen 1610 to conceal the keyboard, can be combined with the multiple-input techniques described above.

In FIG. 16A, the device 100 is closed. It can be seen that the device 100 is provided with various buttons such as button 1620, and a trackpad or other navigation user interface mechanism 1630. To begin opening the device 100, the user's thumb 1600 can be used to apply force along an upper edge of the device 1650. As the force is applied, as shown in FIG. 16B the display 1610 portion of the device 100 is moved upwards, as the keyboard 1605 is revealed and the user's thumb 1600 continues to apply force. In FIG. 16C, in continuation of the movement of the user's thumb 1600 as force was applied to the device 100, the user's thumb 1600 can then move to cover and press the button 1620 (not shown in FIG. 16C, as it would be concealed by the thumb 1600). The user then continues the action, as shown in FIG. 16D, by moving the thumb 1600 up to the touchscreen 1610, following the arcuate path 1670. The processes described above for determining whether a correct unlocking action has been detected may then be applied to determine whether the device should be unlocked.

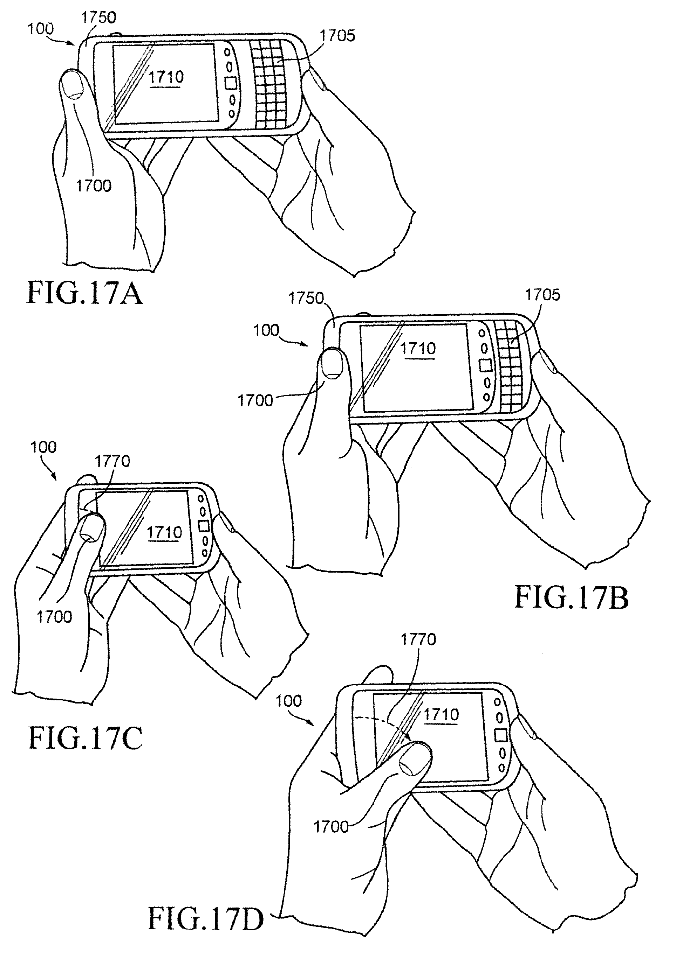

Turning to FIG. 17A, a similar device 100, now held in a landscape orientation, is held open in a user's two hands. In FIG. 17A the keyboard 1705 is shown, and the user's thumb 1700 begins to apply force to an edge of the device 1750 opposite the end with the keyboard 1705. Force is applied so as to begin to close the device 100, as shown in FIG. 17B. In FIG. 17C, it can be seen that the device 100 is completely closed, as the keyboard 1705 is no longer visible, and the user's thumb 1700, as a continuation of the applied force in FIGS. 17A and 17B, begins to trace an arcuate path over the surface of the device 100, as illustrated by the path 1770. The movement of the thumb 1700 is continued in FIG. 17D, where it can be seen that the path 1770 extends further along the touchscreen display 1710 of the device 100. Again, the processes described above may be used to determine whether a correct locking action has been detected, and the device may be locked accordingly.

In a further embodiment, not shown, a handheld electronic device provided with both front and rear user input mechanisms-such as touchscreen or touchpad located on the front of the device, and a second touchpad or other touch-based input mechanism located on the back of the device-may be configured to receive either sequential or concurrent unlock inputs on the front and rear input mechanisms, and to unlock the device when it is determined that the unlock inputs occurred within a predefined time period. For example, a user may hold such an electronic device, with the thumb located on the front of the device and fingers supporting the device from behind, and move the thumb along the front touchscreen of the device while one or more of the fingers sweep the rear touchpad in substantially the opposite direction. In a further variant, the user may depress a button on the front of the device, then move one or more fingers along the rear input mechanism. While these actions may not be continuous since they take place on opposite faces of the device, they may be considered to form part of a single action, as the actions are carried out by the user's hand in a single gesture. In still a further embodiment, the processes described above may be carried out with a peripheral device in communication with a computing device such as a laptop or desktop computer. For example, a drawing tablet peripheral device may be provided not only with a trackpad or touchscreen, but also with buttons; thus, with at least two distinct user input mechanisms, the above lock and unlock processes may be carried out.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

## Claims

1. An electronic device (100) adapted to have locked (1000) and unlocked (1020) states, the electronic device comprising:

   at least two input mechanisms; and
   means adapted to, while the electronic device is in one of said locked (1000) and unlocked (1020) states, detect a single, continuous action applied to said at least two input mechanisms (102); and
   means adapted to transition the electronic device to the other of said locked (1000) and unlocked (1020) states in response to said detecting (102).

2. The electronic device of claim 1, wherein the means adapted to detect are adapted to determine that inputs applied to said at least two input mechanisms constitute a single action based on a timing or a speed of the detected inputs.

3. The electronic device of claim 2, wherein said means adapted to detect are further adapted to determine that a duration of time between a detected first input at a first one of said at least two input mechanisms and a detected second input at a second one of said at least two input mechanisms is within an expected range.

4. The electronic device of either claim 1 or 2, wherein said means adapted to detect are further adapted to determine that a path represented by inputs applied to said at least two input mechanisms was completed within either a predefined range of speed or a predefined range of time.

5. The electronic device of any one of claims 1 to 4, wherein the electronic device is initially in said locked state, and further wherein a first one of the at least two input mechanisms is sufficiently powered to detect a first input, and upon detection of the first input, the second input mechanism is activated such that the second input mechanism is capable of detecting the second input.

6. The electronic device of any one of claims 1 to 5, wherein the at least two input mechanisms are selected from the group consisting of: a button, a keyboard, a touchpad, an optical joystick, a scroll wheel, a touchscreen, and a slider mechanism.

7. The electronic device of claim 6, wherein the at least two input mechanisms are selected from different members of said group.

8. A method of transitioning an electronic device (100) between a locked (1000) and an unlocked (1020) state, comprising:

   detecting a single, continuous action applied to at least two input mechanisms on the electronic device (1100-1035) when the electronic device is in one of said locked (1000) and unlocked (1020) states; and
   transitioning the electronic device to the other of said locked (1000) and unlocked (1020) states in response to said detecting (1140).

9. The method of claim 8, wherein detecting said single, continuous action comprises determining that inputs applied to said at least two input mechanisms constitute a single action based on a timing or a speed of the detected inputs.

10. The method of claim 9, wherein said detecting further comprises determining that a duration of time between a detected first input at a first one of said at least two input mechanisms and a detected second input at a second one of said at least two input mechanisms is within an expected range (1125).

11. The method of either claim 8 or 9, wherein said detecting further comprises determining that a path represented by inputs applied to said at least two input mechanisms was completed within either a predefined range of speed or a predefined range of time.

12. The method of any one of claims 8 to 11, wherein the electronic device is initially in said locked state, and further wherein a first one of the at least two input mechanisms is sufficiently powered to detect a first input, and upon detection of the first input, the second input mechanism is activated such that the second input mechanism is capable of detecting the second input (1010).

13. The method of any one of claims 8 to 12, wherein the at least two input mechanisms are selected from the group consisting of: a button, a keyboard, a touchpad, an optical joystick, a scroll wheel, a touchscreen, and a slider mechanism.

14. The method of claim 13, wherein the at least two input mechanisms are selected from different members of said group.

15. A computer-readable medium bearing program code which, when executed by a electronic device having at least two input mechanisms, causes the electronic device to carry out the method of any one of claims 8 to 14.

FIG. 1

Sleep
(locked)
210

FIG. 2

Sleep 204

User input 212

Inactivity
timeout
202

Active
(unlocked)
200

Locked
300

timeout 314

timeout 322

input interface actuated
302

Input
Enabled
310

lock 324

unlock input 312

Unlocked
320

FIG. 3

100

460  420  470  418  414  460  422

422

F

452

454  452  FIG. 4  470  410  454

452

FIG.5A

FIG.5B

FIG.5C

FIG. 6B

FIG. 6A

25

FIG. 6C

FIG. 6D

EP 2 458 525 A1

**FIG. 6E**

**FIG. 6F**

EP 2 458 525 A1

FIG. 7A

FIG. 7B

FIG. 7C

FIG. 7D

FIG. 7E

FIG.8A

800

810

805

FIG.8B

800

810

FIG.8C

805

850

810

800

805

800

850

810

FIG.8D

FIG. 9A

FIG. 9B

FIG. 9C

activation period 1

activation period 2

gap period

detection period

gap period

time

$t_0$
detect first input

$t_1$
contact with second input interface (not detected)

$t_2$
contact with second input interface detected

$t_3$
contact with second input interface terminates

$t_4$
detect third input

EP 2 458 525 A1

FIG. 10

FIG. 11

```
                                    ┌─────────────────────┐
                                    │  Detect actuation   │
                         ┌─────────>│  of first input     │
                         │          │  mechanism 1100     │
                         │          └──────────┬──────────┘
                         │                     │
                         │                     ▼
              ┌──────────┴──────────┐ ┌─────────────────────┐
              │ Deactivate second   │ │  Activate second    │
              │ input mechanism     │ │  input mechanism     │
              │       1150          │ │       1105          │
              └─────────────────────┘ └──────────┬──────────┘
                         ▲                        │
                      yes│                        ▼
                         │              ┌─────────────────────┐
                         │              │  Start timer and    │
                         │              │  count 1110         │
                         │              └──────────┬──────────┘
                         │                         │
                         │                         ▼
                         │                    ◇ Timeout? ◇
                         └────────────────────◇  1115   ◇
                                               ◇       ◇
                                                  │ no
                                                  ▼
  ┌───────────┐   no  ◇ Gap          ◇   ┌─────────────────────┐
  │ Wipe      │<──────◇ period within ◇<──│  Detect input at    │
  │ device    │       ◇ range?        ◇   │  second input       │
  │ 1165      │       ◇  1125         ◇   │  mechanism 1120     │
  └───────────┘            │              └─────────────────────┘
       ▲               yes │
       │                   ▼
  ◇ Count >     ◇    ┌─────────────────┐
  ◇ limit?      ◇ no │ Detect complete │
  ◇  1160       ◇────│ input 1130      │
       ▲             └────────┬────────┘
       │                      │
  ┌───────────┐               ▼
  │ Count =   │   no    ◇ Correct        ◇
  │ count +1  │<────────◇ input detected? ◇
  │ 1155      │         ◇  1135          ◇
  └───────────┘              │
                         yes │
                             ▼
              ┌─────────────┐   ┌─────────────┐
              │ Unlock      │──>│ Reset count │
              │ device 1140 │   │ 1145        │
              └─────────────┘   └─────────────┘
```

Detect actuation
of first input
mechanism 1200

↓

Store UI state
1205

↓

Start timer 1210

↓

Timeout
or cancel?
1215

— no → Detect input at
second input
mechanism 1220

yes →

Gap
period within
range?
1225

no

↓ yes

Detect complete
input 1230

↓

Correct
input detected?
1235

no

↓ yes

Lock device
1240

FIG. 12

FIG. 13A

FIG. 13B

FIG. 13C

Enter training
mode 1500

↓

Detect actuation
of first input
mechanism 1505

↓

Start timer 1510

↓

Detect input at
second input
mechanism 1515

↓

Store gap time
1520

↓

Detect completion
of second input
1525

↓

Store completion
time 1530

Enter
configuration
mode 1400

↓

Detect device
model 1405

↓

Store gap times
for device
parameters 1410

# FIG. 14

# FIG. 15

FIG.16A

FIG.16B

FIG.16C

FIG.16D

FIG.17A

FIG.17B

FIG.17C

FIG.17D

Europäisches
Patentamt

European
Patent Office

Office européen
des brevets

# EUROPEAN SEARCH REPORT

Application Number

EP 10 19 3001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 086 211 A1 (RESEARCH IN MOTION LTD [CA]) 5 August 2009 (2009-08-05) * paragraph [0029] - paragraph [0045] * ----- | 1-15 | INV. G06F21/20 |
| X | US 2010/099394 A1 (HAINZL RICHARD ANDREAS AXEL [SE]) 22 April 2010 (2010-04-22) * paragraph [0057] - paragraph [0061] * * paragraph [0045] * * figure 5 * ----- | 1-15 | |
| X | "NOKIA 3310. User guide (Issue 3)", INTERNET CITATION, 7 June 1998 (1998-06-07), page 116PP, XP007913789, Retrieved from the Internet: URL:http://www.vodafone.co.nz/help/device-support/nokia/3310/nokia_3310_userguide.pdf [retrieved on 2010-07-08] * page 32 * ----- | 1-4,6, 8-11,13, 15 | |

|  |  |
|---|---|
|  | TECHNICAL FIELDS SEARCHED (IPC) |
|  | G06F H04M |

The present search report has been drawn up for all claims

| Place of search | Date of completion of the search | Examiner |
|---|---|---|
| The Hague | 31 March 2011 | Segura, Gustavo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 19 3001

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2011

| Patent document cited in search report | | Publication date | Patent family member(s) | | Publication date |
|---|---|---|---|---|---|
| EP 2086211 | A1 | 05-08-2009 | AT<br>CA | 484916 T<br>2649092 A1 | 15-10-2010<br>22-07-2009 |
| US 2010099394 | A1 | 22-04-2010 | WO | 2010043277 A1 | 22-04-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040155991 A
- US 20090244013 A
- US 20100128002 A
- US 20100156843 A